# FASCICULE DE BREVET EUROPEEN

(11) **EP 2 443 044 B1**
(45) Date de publication et mention de la délivrance du brevet: **17.04.2013**
(21) Numéro de dépôt: 10738006.5
(22) Date de dépôt: 14.06.2010
(51) Int. Cl.: B65D 77/04, B65D 79/02, B65D 81/20

(54) **POCHE À TÉMOIN DE PERTE D'INTÉGRITÉ INCORPORÉ, PROCÉDÉ DE RÉALISATION D'UNE TELLE POCHE ET PROCÉDÉ D'UTILISATION.**
BEUTEL MIT INTEGRIERTEM FÄLSCHUNGSINDIKATOR, VERFAHREN ZUR HERSTELLUNG EINES SOLCHEN BEUTELS UND VERFAHREN ZU SEINER VERWENDUNG
BAG WITH AN INTEGRATED TAMPER INDICATOR, METHOD FOR MAKING SUCH A BAG, AND METHOD FOR USING SAME

(30) Priorité: 18.06.2009 FR 0954096
(43) Date de publication de la demande: 25.04.2012
(73) Titulaire: Sartorius Stedim Biotech S.A., 13781 Aubagne (FR)
(72) Inventeur: VOUTE, Nicolas, F-13780 Cuges Les Pins (FR)
(74) Mandataire: Derambure, Christian
(86) Numéro de dépôt international: PCT/FR2010/051182
(87) Numéro de publication internationale: WO 2010/146296

(56) Documents cités:
- WO-A1-00/04131
- WO-A1-01/04624
- WO-A1-96/12659
- US-A- 4 098 577
- US-A- 4 434 893
- US-A- 4 436 203
- US-A- 4 813 541
- US-A1- 2007 220 956
- US-B1- 6 196 056
- US-B1- 6 892 567

## Description

L'invention concerne la détection d'une éventuelle perte d'intégrité d'une poche souple, en matière plastique non poreuse, fermée, telle qu'une poche stérile destinée à recevoir un produit ou un dispositif biopharmaceutique ou analogue.

L'invention vise, plus spécialement, une poche à témoin de perte d'intégrité incorporé, actif *per se* et après la fabrication de la poche et au moins avant le moment prévu pour y introduire un produit ou dispositif biopharmaceutique, une telle poche *stricto sensu* ayant toute garantie d'intégrité, spécialement destinée à contenir un produit ou dispositif biopharmaceutique, un procédé de réalisation d'une poche à témoin de perte d'intégrité incorporé et actif, et, enfin, un processus relatif aux poches *stricto sensu* spécialement destinée à contenir un produit ou dispositif biopharmaceutique et devant présenter toute garantie d'intégrité.

On entend ici par produit biopharmaceutique, un produit issu de la biotechnologie - milieux de cultures, cultures cellulaires, solutions tampon, liquides de nutrition artificielle, produits sanguins et dérivés de produits sanguins - ou un produit pharmaceutique ou plus généralement un produit destiné à être utilisé dans le domaine médical. On entend par dispositif biopharmaceutique, un dispositif destiné à être mis en oeuvre dans un processus du domaine biologique ou pharmaceutique - moyens de mesure ou de contrôle, moyens de traitement de produit biopharmaceutique, conteneurs ou parties de conteneurs, moyens de transfert de ou de fermeture. De tels produits ou dispositifs biopharmaceutiques sont de haute valeur ajoutée et il importe que l'on s'assure de leur intégrité, notamment de l'absence de toute contamination.

Aux fins de stockage ou de transport, il est usuel de placer de tels produits ou dispositifs biopharmaceutiques dans des poches à usage unique en matière plastique non poreuse (telle que le polyéthylène ou un complexe comprenant du polyéthylène), souple, fermée et stérile, comportant au moins un port ou accès pouvant être ouvert le moment voulu.

On connaît de telles poches dont les deux grandes parois sont directement réunies l'une à l'autre. Une fois expansées, de telles poches ont un volume limité et restent relativement peu épaisses, ce qui justifie qu'on les appelle souvent poches « pillow », ou poches « 2D » (D signifiant dimensions). On connaît aussi des poches 3D qui comportent deux parois d'extrémité et une paroi latérale pouvant être pliée à plat ou dépliée déployée, soudées entre elles, le volume pouvant être alors de 50 litres au moins, jusqu'à 3.000 litres, voire plus. De telles poches 3D sont décrites dans le document WO00/04131 ou commercialisées par la société Sartorius sous la marque FLEXEL^{®} 3D.

Il est essentiel que de telles poches, une fois fabriquées et lorsqu'elles reçoivent les produits ou dispositifs biopharmaceutiques précédemment mentionnés, soient étanches, du moins présentent un degré d'étanchéité jugé satisfaisant. Il est donc essentiel de pouvoir détecter toute éventuelle perte d'intégrité de telles poches.

On connaît des procédés et dispositifs de contrôle d'intégrité de telles poches mis en oeuvre en ligne sur toutes les poches lors de leur fabrication. Ainsi, la norme F 2095 - 01 de ASTM International dont le titre est « Standard Test Methods for Pressure Decay Leak Test for Nonporous Flexible Packages With and Without Restraining Plates » porte plus précisément sur le procédé dit à chute de pression. Ce procédé est envisagé selon deux modes d'exécution possibles, à savoir avec ou sans plaques de limitation d'expansion.

Dans le mode d'exécution avec plaques de limitation d'expansion, on procède comme suit :
- dans une phase de préparation :
   - on dispose d'une poche à contrôler ayant au moins un port apte à être obturé ou connecté de façon étanche et amovible,
   - on dispose d'une source de gaz sous pression destiné à être introduit dans la poche via le port,
   - on dispose de moyens de mesure de la pression du gaz dans la poche via le port,
   - on dispose de deux plaques fixes de limitation d'expansion, écartées et en regard l'une de l'autre, aptes à ne pas occulter une éventuelle fuite dans les grandes parois de la poche placées contre elles,
   - on place la poche à plat entre les deux plaques de limitation d'expansion,
   - on connecte l'au moins un port de la poche avec la source de gaz et les moyens de mesure de pression, de manière à pouvoir envoyer le gaz sous pression dans la poche et mesurer la pression du gaz dans la poche,
- et, dans une phase de test ultérieure :
   - on envoie le gaz sous pression dans la poche, l'expansion de la poche étant limitée lorsque ses grandes parois viennent contre les plaques de limitation d'expansion,
   - puis, dans une étape ultérieure, on compare la chute de pression dans la poche grâce aux moyens de mesure de pression à un seuil prédéfini de chute de pression d'une poche considérée comme intègre.

Si la chute de pression dans la poche est inférieure au seuil, on considère que la poche a satisfait le contrôle d'intégrité, tandis que si la chute de pression dans la poche est supérieure au seuil on considère que la poche n'a pas satisfait le contrôle d'intégrité.

On connaît des dispositifs pour la mise en oeuvre d'un procédé de contrôle pour des filtres et des membranes, par la technique de chute de pression, sans plaques de limitation d'expansion, par exemple le dispositif SARTOCHECK^{®} 4 de la société SARTORIUS. On connaît des dispositifs avec plaques chez d'autres fournisseurs. Dans tous les cas, de tels dispositifs sont complexes et volumineux et difficilement transportables ou utilisables sur les sites d'utilisation finale des poches.

D'autre part, une rupture accidentelle de l'intégrité de la poche peut se produire après sa fabrication et avant son utilisation finale, par exemple dans les phases de stockage, transport, distribution, livraison ou encore dans la phase qui précède immédiatement la mise en oeuvre de la poche. Ce risque est d'autant plus grand que telle ou telle de ces phases est longue (par exemple la phase de stockage peut atteindre plusieurs années) ou qu'elle implique une manipulation de la poche ou son contact avec des objets propice à son endommagement. Or, une telle rupture de l'intégrité de la poche ne peut être décelée par un procédé de contrôle d'intégrité mis en oeuvre avant que n'intervienne la rupture d'intégrité.

Le document US 6892567 et US 6196056 décrivent des procédés et des appareils pour déterminer l'intégrité d'un emballage ou d'un compartiment reposant sur la transmission d'un gaz test à travers l'emballage ou de la paroi du compartiment. Cet appareil et les instruments de mesure associés forment un ensemble complexe et volumineux présentant les limites mentionnées précédemment.

Le document US 2007/0220956 décrit un procédé et un appareil pour détecter une fuite d'une poche destinée à la réalisation d'un processus biologique et contenant un fluide conducteur, placée dans un conteneur extérieur rigide, consistant en un détecteur de fuite à fonctionnement électrique. Un tel procédé et appareil présentent les mêmes les limites mentionnées précédemment, outre qu'ils ne trouvent application que dans le cas d'une poche remplie, d'un fluide conducteur et enfin de la présence d'un conteneur extérieur rigide.

Le document US 4098577 décrit un procédé et un indicateur pour détecter la perte d'intégrité d'un emballage transparent contenant un produit qui est scellé à l'emballage. L'emballage est empli avec une atmosphère artificielle telle que le gaz carbonique ou l'azote. Un détecteur sensible au pH est placé dans l'emballage et est visible à travers lui. Le détecteur change de couleur en cas de perte de l'atmosphère artificielle par suite d'une perte d'intégrité de l'emballage. Dans les réalisations envisagées par le document US 4098577, l'emballage est rigide, le produit est un objet solide et le détecteur est écarté de ce dernier. Le procédé selon le document US 4098577 est inadapté dans le cas d'un emballage destiné à recevoir un produit fluide venant au contact du détecteur. En outre, le document US 4098577 ne décrit ni ne suggère, bien au contraire, que la détection intervienne avant que le produit ne soit placé dans l'emballage.

Le document US 4813541 décrit un procédé et un emballage à témoin d'inviolabilité. L'emballage comprend un premier conteneur interne, rigide, hermétiquement fermé empli d'une première atmosphère et contenant une substance et un second conteneur externe, rigide, hermétiquement fermé dans lequel se trouve - en position espacé grâce à des entretoises - le premier conteneur, la cavité interne du second conteneur extérieure au premier conteneur étant emplie d'une seconde atmosphère à une pression différente de celle de la première atmosphère, et des moyens de détection étant placés dans la cavité et étant sensibles à une modification de la seconde atmosphère due à une rupture d'intégrité du premier conteneur ou du second conteneur. Le document US 4813541, qui décrit une structure très particulière ne suggère pas que la détection intervienne avant que la substance ne soit placée dans le premier conteneur.

Le document WO 01/04624 décrit un système colorimétrique comprenant un détecteur sensible au gaz carbonique.

Le document WO96/12659 décrit un emballage dit inviolable comprenant une membrane intérieure délimitant un compartiment intérieur, lequel contient un premier milieu composé d'air, ainsi qu'une membrane extérieure délimitant un compartiment extérieur qui entoure le compartiment interne et contient un second milieu composé de dioxyde de carbone. Une languette indicatrice, sensible au milieu environnant est disposée à l'intérieur du compartiment extérieur et elle peut donner une indication relative à un changement dans le premier et dans le second milieu.

Le document US 4,434,893 décrit un emballage pour recevoir des produits comprenant des étuis interne et externe. Dans un mode de réalisation, l'étui interne et l'étui externe ne présentent respectivement qu'une seule paroi flexible et ces étuis interne et externe est mis sous pression à l'aide d'un gaz présentant une pression supérieure à la pression atmosphérique de manière à gonfler leur paroi flexible. Dans un autre mode de réalisation, les deux parois de chacun des étuis interne et externe sont flexibles. Les produits - capsules, gélules ou analogues - à protéger sont inclus à l'intérieur de l'étui interne et l'étui interne est lui-même localisé à de l'étui externe de manière à former une protection empêchant l'accès aux produits.

Le document US 4,436,203 décrit un emballage comprenant un containeur interne de taille prédéfinie, empli d'un produit et mis sous pression avant d'être disposé à l'intérieur d'un containeur externe. Après que sa pression interne n'ait été abaissée au-dessous de la pression atmosphérique, ledit containeur externe est fermé. Ainsi, lorsqu'une des parois de l'emballage se perce, le consommateur est alerté du fait que le produit a pu être touché.

Le document FR 2 252 619 décrit un dispositif destiné à être utilisé avec un emballage fermé normalement de façon hermétique. Il comporte un détecteur disposé de sorte qu'il soit en communication avec l'intérieur de l'emballage mais également visible de l'extérieur. Ce détecteur contient un colorant sensible au pH, qui présente une première couleur à un pH atmosphérique normal, et une seconde couleur à un pH légèrement supérieur ou inférieur au pH atmosphérique normal.

L'invention a donc pour but de pallier les problèmes précédemment mentionnés en proposant de détecter la rupture d'intégrité d'une poche à tout moment souhaité après sa fabrication et en tout état de cause juste avant son utilisation par mise en place dans la poche d'un contenu pouvant être fluide et venir au contact de la face interne de la poche, de façon sûre, aisée, rapide, sans la nécessité d'un dispositif dédié lourd ou complexe, ou d'opérations difficiles ou délicates, sans la nécessité d'avoir recours à un personnel spécialisé spécialement et exclusivement dédié au contrôle de l'intégrité et sans la nécessité d'avoir à tester la poche de façon positive pour s'assurer de son intégrité, la perte d'intégrité étant révélée de façon automatique, et donc sans la nécessité, lorsque la poche fait partie d'une pluralité de poches, d'avoir à tester chaque poche de façon positive.

A cet effet, selon un premier aspect, l'invention vise une poche à témoin de perte d'intégrité incorporé, actif *per se* et après la fabrication de la poche et au moins avant le moment prévu pour y introduire un produit ou dispositif biopharmaceutique,
- comprenant :
   ■ une première enveloppe, intérieure, fermée, souple, en au moins une matière plastique non poreuse à haute capacité barrière aux gaz, délimitant un premier espace, formant *stricto* sensu une poche apte à recevoir le produit ou dispositif biopharmaceutique lorsque souhaité mais vide de celui-ci, comportant d'une part des premiers moyens d'introduction en vue de l'introduction ultérieure, lorsque souhaité, du produit ou dispositif biopharmaceutique dans la poche *stricto sensu,* et d'autre part des premiers moyens d'évacuation en vue de l'évacuation subséquente, lorsque souhaité, du produit ou dispositif biopharmaceutique de la poche *stricto sensu,* les premiers moyens d'introduction et les premiers moyens d'évacuation se trouvant à l'état fermé inactif,
   ■ une seconde enveloppe, extérieure, fermée, en au moins une matière plastique non poreuse à haute capacité barrière aux gaz, délimitant un second espace dans lequel se trouve la poche *stricto sensu* en vue de la détection d'une éventuelle perte d'intégrité de celle-ci, comportant d'une part des seconds moyens d'introduction ayant permis l'introduction préalable de la poche *stricto* sensu dans le second espace, et d'autre part des seconds moyens d'évacuation en vue de l'évacuation de la poche *stricto sensu* du second espace, les seconds moyens d'introduction et les seconds moyens d'évacuation se trouvant à l'état fermé inactif,
   ■ des moyens (11) espaceurs interposés entre la poche *stricto sensu* et la seconde enveloppe, aptes à ce que la face intérieure de la seconde enveloppe n'occulte pas une quelconque zone d'éventuelle perte d'intégrité de la face externe de la poche *stricto sensu,* lesdits moyens étant ou comportant du materiau poreux,
   ■ au moins un gaz traceur choisi, situé, respectivement, dans le premier espace ou dans le second espace, avec une pression partielle plus grande que dans le second espace ou dans le premier espace,
   ■ au moins un détecteur colorimétrique du au moins un gaz traceur responsif à la concentration du au moins un gaz traceur dans l'ambiance dans lequel il se trouve, en passant d'une première couleur à une seconde couleur différente de la première couleur, le au moins un détecteur colorimétrique étant situé, respectivement, dans le second espace ou dans le premier espace,
- de manière à pouvoir, à tout moment souhaité après la fabrication de la poche et au moins juste avant le moment prévu pour évacuer la poche *stricto sensu* de la seconde enveloppe et pour introduire le produit ou dispositif biopharmaceutique dans la poche *stricto sensu,* interpréter le constat visuel que le au moins un détecteur colorimétrique est soit de la première couleur comme significatif que la poche *stricto sensu* a gardé son intégrité, soit de la seconde couleur comme significatif que la poche *stricto sensu* a perdu son intégrité.

Selon une première réalisation possible, au moins un détecteur colorimétrique est logé dans le premier espace formant la poche *stricto sensu*, le second espace - hors la poche *stricto sensu -* ayant une ambiance comportant du gaz traceur à une pression partielle plus élevée que l'ambiance du premier espace. Dans ce cas, selon une variante d'exécution, au moins un détecteur colorimétrique logé dans le premier espace formant la poche *stricto sensu* et le produit ou dispositif biopharmaceutique destiné à emplir la poche *stricto sensu* sont de natures aptes à être en contact réciproque sans que la qualité biopharmaceutique du produit ou dispositif qui y sera placé ultérieurement en soit affectée. Selon une autre variante d'exécution, la poche à témoin de perte d'intégrité incorporé et actif comporte au moins une paroi de séparation située dans le premier espace formant la poche *stricto sensu*, présentant une perméabilité sélective, à savoir laissant passer le gaz traceur et ne laissant pas passer le produit ou dispositif biopharmaceutique, cette au moins une paroi de séparation délimitant seule ou avec la première enveloppe au moins un premier compartiment dans lequel est logé le au moins un détecteur colorimétrique.

Selon une seconde réalisation possible, au moins un détecteur colorimétrique est logé dans le second espace, hors de la poche *stricto sensu*, le premier espace formant la poche *stricto sensu* ayant une ambiance comportant du gaz traceur à une pression partielle plus élevée que l'ambiance du second espace hors de la poche *stricto sensu.* Selon une variante d'exécution, la poche comporte au moins une paroi de séparation située dans le second espace hors de la poche *stricto sensu* délimitant seule ou avec la première ou la seconde enveloppe au moins un second compartiment dans lequel est logé le au moins un détecteur colorimétrique.

Selon les réalisations, la poche *stricto sensu* est une poche 2D ou une poche 3D comportant au moins un gousset.

Selon l'invention, les moyens (11) espaceurs sont ou comportent du matériau poreux. Par exemple, ils se présentent sous la forme d'au moins une couche poreuse ou en au moins un matériau poreux. Selon une variante d'exécution, ils se présentent sous la forme d'au moins une couche poreuse ou en au moins un matériau poreux recouvrant intégralement structurellement ou fonctionnellement la face externe de la poche *stricto sensu*, les premiers moyens d'introduction et les premiers moyens d'évacuation de la poche *stricto sensu,* se trouvant à l'état fermé inactif et la face externe de l'intérieur du gousset de la poche *stricto sensu,* lorsqu'il s'agit d'une poche 3 D.

Selon les réalisations, le au moins un détecteur colorimétrique est disposé de façon non fixe ou de façon fixe dans l'espace - premier ou second - dans lequel il se trouve, étant alors, dans une variante d'exécution, fixé ou incorporé à la face interne de la première enveloppe, à la face intérieure de la seconde enveloppe ou aux moyens (11) espaceurs.

Selon les réalisations, la première enveloppe d'une part, la seconde enveloppe d'autre part, comprend une ou plusieurs couches superposées solidaires et incorpore au moins une matière plastique à haute capacité barrière aux gaz.

Selon les réalisations, un gaz traceur est choisi dans le groupe comprenant l'oxygène, le gaz carbonique, l'hélium.

Selon une réalisation, le au moins un détecteur colorimétrique est un organe autonome, dépourvu de source d'énergie interne et de connexions extérieures.

Selon une réalisation, le au moins un détecteur colorimétrique est surfaciquement étendu de manière à la fois à être responsif à la concentration en gaz traceur dans l'ambiance dans laquelle il se trouve et à ce qu'un observateur puisse constater visuellement s'il se trouve avoir la première couleur ou la seconde couleur.

Selon une réalisation, le au moins détecteur colorimétrique se trouve en un emplacement localisé de la poche.

Selon une réalisation, la poche à témoin de perte d'intégrité incorporé et actif comporte plusieurs détecteurs colorimétriques en plusieurs emplacements de la poche. Dans une variante d'exécution, les détecteurs colorimétriques sont au moins sensiblement répartis dans la poche. Selon une première réalisation, la poche comporte plusieurs détecteurs colorimétriques analogues dans le même espace, premier espace ou second espace hors de la poche *stricto sensu.* Selon une seconde réalisation, la poche à témoin de perte d'intégrité incorporé et actif comporte en premier lieu, d'une part, au moins un premier détecteur colorimétrique responsif à la concentration en un premier gaz traceur et, d'autre part, au moins un second détecteur colorimétrique responsif à la concentration en un second premier gaz traceur différent du premier gaz traceur et, en second lieu, d'une part, un premier gaz traceur dans le second espace avec une pression partielle plus grande que dans le premier espace, et, d'autre part, un second gaz traceur dans le premier espace avec une pression partielle plus grande que dans le second espace hors de la poche *stricto sensu.*

Selon une réalisation, un espace - premier ou second espace hors de la poche *stricto sensu -* contient du gaz traceur et que l'autre espace - second espace hors de la poche *stricto sensu* ou premier espace - ne comporte pas ou substantiellement pas de gaz traceur.

Selon une réalisation, un détecteur colorimétrique est en forme générale plate, plane ou incurvée, telle qu'une pastille ou une pseudo pastille ou en forme générale linéaire ou de bande, tout en étant rigide, flexible ou semi rigide semi flexible.

Selon une réalisation, la poche à témoin de perte d'intégrité incorporé et actif est aplatie ou sensiblement aplatie sur elle-même et ainsi aisément apte au stockage, au transport, à la manipulation.

Selon une caractéristique, la seconde enveloppe extérieure est apte à permettre à un observateur extérieur d'identifier depuis l'extérieur de la l'enveloppe extérieure la couleur du au moins un détecteur colorimétrique. Selon une variante d'exécution, la seconde enveloppe extérieure est transparente ou translucide ou comporte une fenêtre transparente ou translucide pour observer la couleur du au moins un détecteur colorimétrique situé en regard ou au voisinage.

Selon une réalisation, la seconde enveloppe est souple.

Selon une réalisation, la poche à témoin de perte d'intégrité incorporé et actif comporte en outre un suremballage extérieur de protection dans lequel est logé la seconde enveloppe dans laquelle se trouve la poche *stricto sensu*.

Selon un deuxième aspect, l'invention vise une poche *stricto sensu* ayant toute garantie d'intégrité, spécialement destinée à contenir un produit ou dispositif biopharmaceutique, obtenue à partir d'une poche à témoin de perte d'intégrité incorporé et actif telle qu'elle vient d'être décrite, dans laquelle, le au moins un détecteur colorimétrique étant de la première couleur, la poche *stricto sensu* a été évacuée, extraite, sortie de la seconde enveloppe, la poche *stricto sensu* étant alors aptes à l'emploi.

Selon une variante possible de réalisation, au moins un détecteur colorimétrique est logé dans le premier espace de la poche *stricto sensu.*

Selon un troisième aspect, l'invention vise un procédé de réalisation d'une poche à témoin de perte d'intégrité incorporé et actif telle qu'elle a été décrite, dans lequel :
■ on dispose d'une première enveloppe, souple, en au moins une matière plastique non poreuse à haute capacité barrière aux gaz, délimitant un premier espace, formant *stricto sensu* une poche apte à recevoir le produit ou dispositif biopharmaceutique lorsque souhaité mais vide de celui-ci, comportant d'une part des premiers moyens d'introduction en vue de l'introduction ultérieure, lorsque souhaité, du produit ou dispositif biopharmaceutique dans la poche *stricto sensu,* et d'autre part des premiers moyens d'évacuation en vue de l'évacuation subséquente, lorsque souhaité, du produit ou dispositif biopharmaceutique de la poche *stricto sensu,*
■ on dispose d'une seconde enveloppe, en au moins une matière plastique non poreuse à haute capacité barrière aux gaz, comportant d'une part des seconds moyens d'introduction en vue de l'introduction de la poche *stricto sensu* dans le second espace, et d'autre part des seconds moyens d'évacuation en vue de l'évacuation de la poche *stricto sensu* du second espace,
■ on dispose de moyens (11) espaceurs,
■ on dispose d'au moins un gaz traceur choisi,
■ on dispose d'au moins un détecteur colorimétrique du au moins un gaz traceur responsif à la concentration du au moins gaz traceur dans l'ambiance dans lequel il se trouve, en passant d'une première couleur à une seconde couleur différente de la première couleur,
■ on introduit la poche *stricto sensu* dans la seconde enveloppe et on interpose entre elles les moyens (11) espaceurs de manière que la face intérieure de la seconde enveloppe n'occulte pas une quelconque zone d'éventuelle perte d'intégrité de la face externe de la poche *stricto sensu,*
■ on introduit le au moins un gaz traceur choisi, respectivement, dans le premier espace ou dans le second espace hors de la poche *stricto sensu,* avec une pression partielle plus grande que dans le second espace hors de la poche *stricto sensu* ou dans le premier espace, et on place le au moins un détecteur colorimétrique du au moins un gaz traceur dans le second espace hors de la poche *stricto sensu* ou dans le premier espace, respectivement,
■ et, finalement, on ferme la poche *stricto sensu* et la seconde enveloppe.

Selon les réalisations, on dispose le au moins un détecteur colorimétrique dans la poche *stricto sensu,* et on introduit le au moins un gaz traceur dans le second espace hors de la poche *stricto sensu* à une pression partielle plus élevée que l'ambiance du premier espace, ou on dispose le au moins un détecteur colorimétrique dans la seconde enveloppe hors de la poche *stricto sensu*, et on introduit le au moins un gaz traceur dans la poche *stricto sensu* à une pression partielle plus élevée que l'ambiance du premier espace.

Selon une réalisation, on introduit le au moins un gaz traceur dans un espace - premier espace ou second espace hors de la poche *stricto sensu -* et l'on n'introduit pas du au moins un gaz traceur sans l'autre espace - second espace hors de la poche *stricto sensu* ou premier espace.

Selon une réalisation, on purge de l'air de l'espace contenant du gaz traceur à plus faible pression partielle ou sans gaz traceur.

Selon les réalisations, on dispose le au moins un détecteur colorimétrique de façon non fixe dans l'espace - premier ou second - dans lequel il doit se trouver ou au contraire de façon fixe dans l'espace - premier ou second - dans lequel il doit se trouver, en le fixant ou incorporant à la face interne de la première enveloppe, à la face intérieure de la seconde enveloppe ou aux moyens espaceurs.

Selon une réalisation, on place plusieurs détecteurs colorimétriques en plusieurs emplacements de la poche. Selon une variante d'exécution, on place plusieurs détecteurs colorimétriques analogues dans le même espace, premier espace ou second espace hors de la poche *stricto sensu*. Selon une autre variante d'exécution, on place au moins un détecteur colorimétrique dans le premier espace et au moins un détecteur colorimétrique dans le second espace hors de la poche *stricto sensu*.

Selon une réalisation, on place la seconde enveloppe dans laquelle se trouve la poche *stricto sensu* dans un suremballage extérieur de protection.

Selon un quatrième et dernier aspect, l'invention vise un processus relatif aux poches *stricto sensu* spécialement destinée à contenir un produit ou dispositif biopharmaceutique et devant présenter toute garantie d'intégrité, le processus comprenant, sur un lieu de fabrication, des opérations initiales consistant à fabriquer la poche *stricto sensu*, sur un lieu d'utilisation, des opérations finales consistant à utiliser la poche *stricto sensu* en y plaçant lorsque souhaité le produit ou dispositif biopharmaceutique et en assurant le traitement souhaité, et des opérations intermédiaires de stockage, transport, manipulation, caractérisé par :
- la réalisation, sur le lieu de fabrication, d'une poche à témoin de perte d'intégrité incorporé et actif comprenant la poche *stricto sensu,* tel qu'il a été décrit,
- le transport de la poche à témoin de perte d'intégrité incorporé et actif comprenant la poche *stricto sensu* du lieu de fabrication au lieu d'utilisation, moyennant le cas échéant des opérations de stockage et de manipulation,
- et, au moins sur le lieu d'utilisation et juste avant le moment prévu pour évacuer la poche *stricto sensu* de la seconde enveloppe et pour introduire le produit ou dispositif biopharmaceutique dans la poche *stricto sensu,* l'examen visuel de la couleur du au moins un détecteur colorimétrique afin de constater si le au moins un détecteur colorimétrique est de la première couleur ou de la seconde couleur, la poche *stricto sensu* n'étant utilisée pour le produit ou dispositif biopharmaceutique que si le au moins un détecteur colorimétrique est de la première couleur, tandis que si le au moins un détecteur colorimétrique est de la seconde couleur, la poche *stricto sensu* n'est pas utilisée pour le produit ou dispositif biopharmaceutique.

Selon une caractéristique de ce processus, il existe une étape dans laquelle le détecteur colorimétrique garde la première couleur ou passe de la première couleur à la seconde couleur intervenant en temps masqué lors des opérations intermédiaires de stockage, transport, manipulation.

On décrit maintenant plusieurs modes de réalisation de l'invention à l'aide des dessins, dans lesquels :

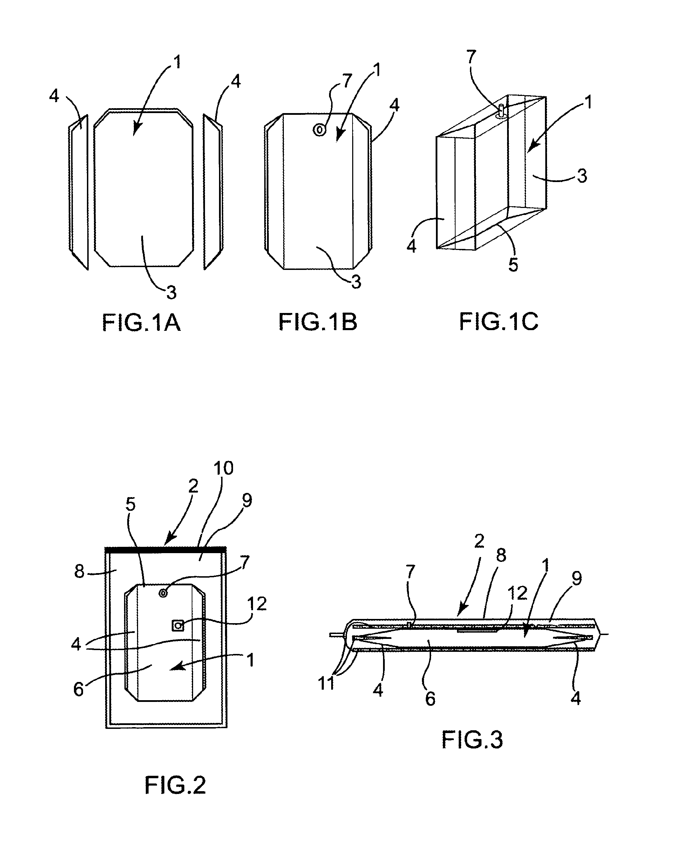

- Les figures 1A, 1B et 1C sont trois vues d'une poche *stricto sensu* de type 3D, à savoir, respectivement, une vue éclatée et schématique de la poche avant réalisation, une vue en élévation de la poche pliée à plat, et une vue en perspective de la poche en volume ;
- Les figures 2 et 3 sont deux vues d'une première réalisation de poche à témoin de perte d'intégrité incorporé, actif *per se* et après la fabrication de la poche et au moins avant le moment prévu pour y introduire un produit ou dispositif biopharmaceutique, comprenant une poche *stricto sensu,* une seconde enveloppe, extérieure, des moyens espaceurs, un gaz traceur et un détecteur colorimétrique du gaz traceur, à savoir une vue en élévation et une vue en coupe par un plan transversal de la figure 2 ; dans cette première réalisation, le détecteur colorimétrique est logé dans la poche *stricto sensu ;*

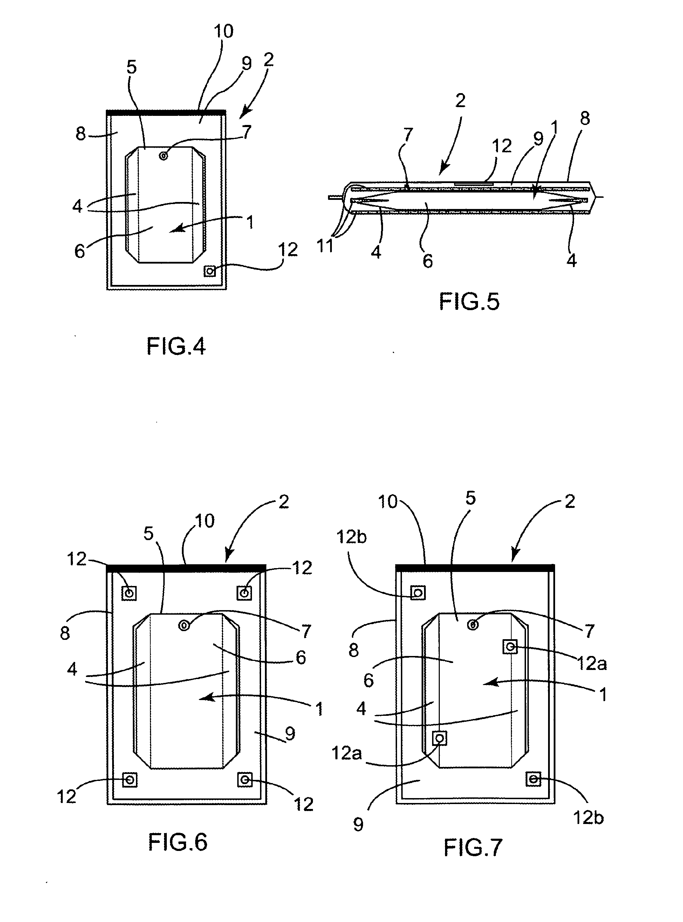

- Les figures 4 et 5 sont deux vues analogues aux figures 2 et 3 d'une seconde réalisation de poche à témoin de perte d'intégrité incorporé et actif ; dans cette seconde réalisation, le détecteur colorimétrique est logé dans le second espace délimité par la seconde enveloppe, hors de la poche *stricto sensu ;*
- Les figures 6 et 7 sont deux vues analogues aux figures 2 et 4 de deux autres réalisations de poche à témoin de perte d'intégrité incorporé et actif, comportant plusieurs détecteurs colorimétriques, respectivement dans le second espace délimité par la seconde enveloppe, hors de la poche *stricto sensu* et à la fois dans le second espace délimité par la seconde enveloppe, hors de la poche *stricto sensu et* dans la poche *stricto sensu.*

On connaît, dans le domaine biopharmaceutique, des poches 3D, 1, souple, spécialement destinées à contenir un fluide biopharmaceutique tel que précédemment défini.

Une telle poche 1 est appelée ici « poche *stricto sensu* », signifiant par cette expression qu'elle constitue à proprement parler la poche destinée à contenir le fluide biopharmaceutique, alors que cette poche *stricto sensu* est incorporée dans un ensemble plus complexe appelé « poche à témoin de perte d'intégrité incorporé et actif » 2.

Une telle poche *stricto sensu* 1 peut être de volume important de 50 litres au moins, jusqu'à 1.000 litres, voire même plus, ce qui justifie qu'on la qualifie de 3D. Une telle poche est décrite par exemple dans la demande internationale WO00/04131, cette réalisation n'étant pas exclusive d'autres. Une telle poche est également commercialisée par la société Sartorius sous la marque FLEXEL^{®} 3D.

Une telle poche *stricto sensu* 1 comporte notamment des parois principales 3 et deux goussets latéraux 4, les différentes pièces constitutives étant soudées entre elles le long de lignes de soudure 5, de manière à former une enveloppe, appelée « première enveloppe » également désignée par la référence 1.

La poche *stricto sensu* 1 est fermée, souple et réalisée à partir de matière plastique non poreuse à haute capacité barrière aux gaz, comprenant une ou plusieurs couches superposées solidaires incorporant au moins une matière plastique à haute capacité barrière aux gaz, tel que l'EVOH.

La poche *stricto sensu* 1 délimite un premier espace 6, de volume approprié, apte à recevoir le produit biopharmaceutique lorsque cela est souhaité.

La poche *stricto sensu* 1 comporte des premiers moyens d'introduction 7 en vue de l'introduction, lorsque cela est souhaité, du produit biopharmaceutique dans le premier espace 6.

La poche *stricto sensu* 1 comporte également des premiers moyens d'évacuation en vue de l'évacuation, lorsque cela est souhaité, du produit biopharmaceutique du premier espace 6.

De tels premiers moyens d'introduction et premiers moyens d'évacuation peuvent se présenter sous la forme de ports, agencés pour être ouverts ou fermés, en fonction des besoins.

Une telle poche *stricto sensu* 1 se trouve typiquement dans deux états extrêmes : un état plié à plat et un état déplié déployé. Elle peut être déformée pour passer de l'un à l'autre de ces états ou se trouver dans tout état intermédiaire.

Une telle poche *stricto sensu* 1 est typiquement destinée à être associée à un conteneur rigide contenant la poche de l'extérieur. Un tel conteneur est décrit dans une variante possible de réalisation dans le document EP-A-1012073 et également commercialisé par la société Sartorius sous la marque PALLETTANK^{®}.
Une telle poche *stricto sensu* 1 est typiquement destinée à être associée à un conteneur rigide

Le processus opératoire de telles poches *stricto sensu* 1 consiste, sur un lieu de fabrication donné, à réaliser les opérations initiales consistant à fabriquer la poche *stricto sensu* 1 et, sur un lieu d'utilisation, le plus souvent différent et distant du lieu de fabrication, à réaliser un certain nombre d'opérations dites finales consistant à utiliser la poche *stricto sensu* 1, c'est-à-dire y placer, au moment où cela est souhaité, un produit biopharmaceutique puis en assurer le traitement souhaité. Ce traitement est le stockage, le transport ou tout autre traitement fonctionnel tel que mélange, aération ou autre.

Entre les opérations initiales et les opérations finales interviennent des opérations intermédiaires telles que typiquement le stockage, le transport ou la manipulation. Ces opérations intermédiaires peuvent s'étendre sur une période assez longue, par exemple plusieurs mois, voire plusieurs années, s'agissant par exemple du stockage.

Bien que les poches *stricto sensu* 1 soient réalisées à partir de matière plastique non poreuse à haute capacité barrière aux gaz et que les lignes de soudure 5 soient a *priori* étanches, il est essentiel de s'assurer que chaque poche présente l'étanchéité voulue, non seulement lors de sa fabrication, mais également, après fabrication, au moins juste avant le moment prévu pour y introduire le produit biopharmaceutique. A défaut, la qualité du produit biopharmaceutique pourrait être affectée et le produit biopharmaceutique rendu inutilisable ou la poche *stricto sensu* pourrait être si détériorée qu'elle ne pourrait plus remplir sa fonction. De telles situations sont particulièrement graves et gênantes, alors que le produit biopharmaceutique placé dans la poche *stricto sensu* est en grande quantité, coûteux, rare.

Une poche *stricto sensu* 1 dont on a vérifié qu'elle présente l'étanchéité voulue est dite poche *stricto sensu* 1 présentant toute garantie d'intégrité. Une poche ne présentant pas l'étanchéité voulue est dite poche *stricto sensu* 1 ayant perdu son intégrité.

L'intégrité de la poche *stricto sensu* 1 est indispensable pour que celle-ci remplisse sa fonction de conteneur étanche et stérile, le maintien de la stérilité étant un facteur critique dans les processus biopharmaceutiques.

L'intégrité d'une poche *stricto sensu* 1 peut être affectée par suite de défauts de fabrication (présence d'un ou de plusieurs petits trous dans la poche ou lignes de soudure 5 déficientes, par exemple) ou par la suite lors des opérations intermédiaires de stockage, transport ou manipulation, le risque étant d'autant plus élevé que ces opérations intermédiaires s'étendent sur une longue période de temps.

Afin de pouvoir, au moins sur le lieu d'utilisation et juste avant le moment prévu pour introduire le produit biopharmaceutique dans la poche *stricto sensu* 1, le processus relatif aux poches *stricto sensu* est modifié, conformément à l'invention.

Ce processus comprend, tout d'abord, la réalisation, sur le lieu de fabrication, d'une poche stricto sensu et la fabrication, à partir de celle-ci d'une poche à témoin de perte d'intégrité incorporé et actif 2.

Ce processus comprend, ensuite, le transport de cette poche à témoin de perte d'intégrité incorporé et actif 2 du lieu de fabrication au lieu d'utilisation, moyennant le cas échéant des opérations de stockage et de manipulation, toutes ces opérations constituant les opérations dites intermédiaires.

Ce processus comprend, enfin, au moins sur le lieu d'utilisation et juste avant le moment prévu pour introduire le produit biopharmaceutique dans la poche *stricto sensu* 1, le contrôle de l'intégrité de la poche *stricto sensu* 1, celle-ci n'étant utilisée pour le produit biopharmaceutique que si l'intégrité est garantie, tandis que si l'intégrité ne peut être garantie, la poche *stricto sensu* 1 n'est pas utilisée pour le produit biopharmaceutique.

Selon l'invention, ce contrôle de l'intégrité de la poche *stricto sensu* 1 est réalisé de façon sûre, aisée, rapide, sans la nécessité d'un dispositif dédié lourd ou complexe, ou d'opérations difficiles ou délicates, sans la nécessité d'avoir recours à un personnel spécialisé spécialement et exclusivement dédié au contrôle de l'intégrité et sans la nécessité d'avoir à tester la poche de façon positive pour s'assurer de son intégrité, la perte d'intégrité étant révélée de façon automatique, et donc sans la nécessité, lorsque la poche fait partie d'une pluralité de poches, d'avoir à tester chaque poche de façon positive.

De plus, ce contrôle est réalisé après une phase opératoire qui intervient en temps masqué lors des opérations intermédiaires de stockage, transport, manipulation, et sans la nécessité d'intervention.

L'invention s'applique non seulement dans le cas où la poche *stricto sensu* 1 est une poche 3D, mais également dans le cas d'une poche 2D.

L'invention s'applique également non seulement dans le cas d'un produit biopharmaceutique, mais également dans le cas d'un dispositif biopharmaceutique, tel que précédemment défini.

La poche 2 à témoin de perte d'intégrité incorporé, actif *per se* et après la fabrication de la poche et au moins avant le moment prévu pour y introduire un produit ou dispositif biopharmaceutique, telle qu'elle est fabriquée, et avant toute utilisation, comprend, tout d'abord la poche *stricto sensu* 1.

La poche *stricto sensu* 1 est alors fermée et vide du produit ou dispositif biopharmaceutique. Ses premiers moyens 7 d'introduction et ses premiers moyens d'évacuation se trouvent à l'état fermé inactif.

La poche 2 à témoin de perte d'intégrité incorporé et actif comprend ensuite une seconde enveloppe 8, extérieure, la poche *stricto sensu* 1 étant intérieure.

La seconde enveloppe 8 est fermée, réalisée en au moins une matière plastique non poreuse à haute capacité barrière aux gaz, et, dans la réalisation représentée, souple. Par exemple, la seconde enveloppe 8 comprend une ou plusieurs couches superposées solidaires incorporant au moins une matière plastique à haute capacité barrière aux gaz, tel que l'EVOH.

La seconde enveloppe 8 délimite un second espace 9, dans lequel se trouve la poche *stricto sensu* 1.

C'est par cet arrangement que la poche 2 permet la détection d'une éventuelle perte d'intégrité de la poche *stricto sensu* 1.

La seconde enveloppe 8 comporte également des seconds moyens d'introduction 10 ayant permis l'introduction préalable de la poche *stricto sensu* 1 dans le second espace 9, tels qu'une ouverture fermée ensuite par une ligne de soudure.

La seconde enveloppe 8 comporte également des seconds moyens d'évacuation (extraction ou sortie) en vue de l'évacuation (extraction ou sortie) de la poche *stricto sensu* 1 du second espace 9, tels qu'une déchirure de la seconde enveloppe 8.

Dans la poche 2 à témoin de perte d'intégrité incorporé et actif, les seconds moyens d'introduction 10 et les seconds moyens d'évacuation se trouvent à l'état fermé inactif.

La poche 2 à témoin de perte d'intégrité incorporé et actif comprend ensuite des moyens espaceurs 11, interposés entre la poche *stricto sensu* 1 et la seconde enveloppe 8.

Ces moyens espaceurs 11 sont aptes à ce que la face intérieure de la seconde enveloppe 8 n'occulte pas une quelconque zone d'éventuelle perte d'intégrité de la face externe de la poche *stricto sensu* 1.

La poche 2 à témoin de perte d'intégrité incorporé et actif comprend ensuite au moins un gaz traceur choisi et au moins un détecteur colorimétrique 12 de ce gaz traceur.

Un tel détecteur colorimétrique 12 est responsif à la concentration du gaz traceur dans l'ambiance dans lequel il se trouve, en passant d'une première couleur à une seconde couleur différente de la première couleur.

Un tel gaz traceur est choisi par exemple dans le groupe comprenant l'oxygène, le gaz carbonique, l'hélium. Un tel détecteur colorimétrique 12 adapté à un tel gaz traceur est accessible à l'homme du métier. Un tel détecteur colorimétrique 12 est un organe autonome, dépourvu de source d'énergie interne et de connexions extérieures.

Un tel détecteur colorimétrique 12 est surfaciquement étendu de manière, à la fois, à pouvoir être efficacement responsif à la concentration en gaz traceur dans l'ambiance dans laquelle il se trouve et à permettre qu'un observateur puisse constater visuellement s'il présente la première couleur ou la seconde couleur.

Selon les réalisations, un tel détecteur colorimétrique 12 est en forme générale plate, plane ou incurvée, telle qu'une pastille ou une pseudo pastille ou en forme générale linéaire ou de bande, tout en étant rigide, flexible ou semi rigide semi flexible.

La poche 2 à témoin de perte d'intégrité incorporé et actif comprend ensuite des moyens espaceurs est aplatie ou sensiblement aplatie sur elle-même et ainsi aisément apte au stockage, au transport, à la manipulation, notamment dans les opérations qualifiées plus haut d'intermédiaires.

De façon générale, le gaz traceur se trouve respectivement, dans le premier espace 6 ou dans le second espace 9 hors de la poche *stricto sensu* 1, avec une pression partielle plus grande que dans le second espace 9 hors de la poche *stricto sensu* 1 ou dans le premier espace 6. En variante, un espace - premier ou second espace hors de la poche *stricto sensu* 6, 9 - contient du gaz traceur et que l'autre espace - second espace hors de la poche *stricto sensu* ou premier espace 9, 6 - ne comporte pas ou substantiellement pas de gaz traceur.

Alors que le gaz traceur se trouve respectivement, dans le premier espace 6 ou dans le second espace 9 hors de la poche *stricto sensu* 1, le détecteur colorimétrique 12 est situé, respectivement, dans le second espace 9 hors de la poche *stricto sensu* 1 ou dans le premier espace 6.

Ainsi, à tout moment souhaité après la fabrication de la poche 2 à témoin de perte d'intégrité incorporé et actif - et au moins juste avant le moment prévu pour l'utilisation de la poche *stricto sensu* 1 (introduction du produit ou dispositif biopharmaceutique dans la poche *stricto sensu* 1), un observateur extérieur peut constater *de visu* la couleur du détecteur colorimétrique 1.

Cet observateur interprète ce constat visuel de la manière suivante : si le détecteur colorimétrique 12 est de la première couleur, la poche *stricto sensu* 1 a toute son intégrité. Si le détecteur colorimétrique 12 est de la seconde couleur, la poche *stricto sensu* 1 a perdu son intégrité.

On entend par « interpréter », le fait de donner pour la poche *stricto sensu* 1, relativement à son intégrité, une signification découlant du constat de la couleur du détecteur colorimétrique 12. Cette correspondance couleur du détecteur colorimétrique 12 ⇔ intégrité de la poche *stricto sensu* 1 est biunivoque, ce qui ne laisse aucun doute quant à l'intégrité ou non de la poche *stricto sensu* 1, au seul vu de la couleur du détecteur colorimétrique 12, sans la nécessité d'opérations, manipulations, supputations, calculs...

La seconde enveloppe 8 est conçue de manière à permettre à un observateur extérieur d'identifier depuis l'extérieur de cette enveloppe 8, la couleur du détecteur colorimétrique 12 se trouvant à l'intérieur. A cet effet, la seconde enveloppe 8 est, selon les réalisations, transparente ou translucide ou elle comporte une fenêtre transparente ou translucide pour observer la couleur du détecteur colorimétrique 12 situé en regard ou au voisinage de cette fenêtre.

Selon une réalisation possible, il est prévu en outre un suremballage extérieur de protection dans lequel est logée la poche 2 à témoin de perte d'intégrité incorporé et actif, étant entendu que la seconde enveloppe 8 peut elle-même participer à l'emballage et à la protection de la poche *stricto sensu* 1.

Dans une première réalisation illustrée par les figures 2 et 3, le détecteur colorimétrique 12 est logé dans le premier espace 6 formant la poche *stricto sensu* 1, tandis que le second espace 9 hors de la poche *stricto sensu* 1 a une ambiance comportant du gaz traceur à une pression partielle plus élevée que l'ambiance du premier espace 6.

Selon une première variante de cette première réalisation, le détecteur colorimétrique 12 et le produit ou dispositif biopharmaceutique sont de natures aptes à être en contact réciproque sans que la qualité biopharmaceutique du produit ou dispositif en soit affectée.

Selon une première variante de cette même première réalisation, la poche 2 comporte une paroi de séparation située dans le premier espace 6 formant la poche *stricto sensu* 1. Cette paroi de séparation présente une perméabilité sélective, à savoir laissant passer le gaz traceur et ne laissant pas passer le produit ou dispositif biopharmaceutique. Cette paroi de séparation délimite, à elle seule ou en combinaison avec la première enveloppe 1, un premier compartiment dans lequel est logé le détecteur colorimétrique 12.

Dans une seconde réalisation illustrée par les figures 4 et 5, le détecteur colorimétrique 12 est logé dans le second espace 9, hors la poche *stricto sensu* 1, le premier espace 6 ayant alors une ambiance comportant du gaz traceur à une pression partielle plus élevée que l'ambiance du second espace 9, hors la poche *stricto sensu* 1.

Selon une variante de cette seconde réalisation, la poche 2 comporte hors de la poche *stricto sensu* 1, une paroi de séparation située dans le second espace 9, hors la poche *stricto sensu* 1. Cette paroi de séparation délimite, à elle seule ou en combinaison avec la première enveloppe 1 ou avec la seconde enveloppe 8, un second compartiment dans lequel est logé le détecteur colorimétrique 12.

Selon une réalisation, les moyens espaceurs 11 sont ou comportent du matériau poreux. Par exemple, ils se présentent sous la forme d'au moins une couche poreuse ou en au moins un matériau poreux, recouvrant intégralement structurellement ou fonctionnellement la face externe de la poche *stricto sensu* 1. Selon les réalisations, une telle couche poreuse ou en au moins un matériau poreux est réalisée en tissus, en non tissé, en PE, en PP, en PTFE, ou analogue, cette liste n'étant pas limitative. La disposition constructive indiquée vise à ce que la face intérieure de la seconde enveloppe 8, même si elle est contre la face externe de la première enveloppe 1, n'occulte pas une quelconque zone d'éventuelle perte d'intégrité de la poche *stricto sensu* 1, la couche poreuse ou en au moins un matériau poreux des moyens espaceurs 11 étant interposée entre ces deux faces.

De plus, les moyens espaceurs 11, ainsi réalisés, recouvrent intégralement structurellement ou fonctionnellement les premiers moyens d'introduction 7 et les premiers moyens d'évacuation de la poche *stricto sensu* 1, se trouvant à l'état fermé inactif.

Egalement, les moyens espaceurs 11, ainsi réalisés, recouvrent intégralement structurellement ou fonctionnellement la face externe de l'intérieur du gousset 4 de la poche *stricto sensu* 1, lorsque celle-ci est une poche 3 D.

On entend par recouvrement intégral structurel, le fait que les moyens espaceurs 11 recouvrent intégralement de façon structurelle la poche *stricto sensu* 1. On entend par recouvrement intégral fonctionnel, le fait que les moyens espaceurs 11, sans nécessairement recouvrir intégralement et de façon structurelle la poche *stricto sensu* 1, assurent la fonction d'espacement sur toute la surface de la poche *stricto sensu* 1.

La poche 2 à témoin de perte d'intégrité incorporé et actif peut faire l'objet de diverses variantes de réalisation.

Selon les réalisations, le détecteur colorimétrique 12 est disposé de façon non fixe ou au contraire de façon fixe dans l'espace - premier 6 ou second 9 - dans lequel il se trouve. Dans la seconde occurrence, le détecteur colorimétrique 12 est par exemple fixé ou incorporé à la face interne de la première enveloppe 1, ou à la face intérieure de la seconde enveloppe 8, ou encore aux moyens espaceurs 11.

Selon les réalisations, le détecteur colorimétrique 12 se trouve en un emplacement localisé de la poche 2 à témoin de perte d'intégrité incorporé et actif ou bien il est prévu plusieurs détecteurs colorimétriques 12 en plusieurs emplacements de la poche 2, notamment au moins sensiblement répartis dans la poche de manière à être situés suffisamment près de toute éventuelle perte d'intégrité, une telle structure apportant le maximum de sécurité et d'efficacité.

Par exemple, il peut être prévu plusieurs détecteurs colorimétriques 12 analogues dans le même espace, à savoir le premier espace 1 ou le second espace 9 hors de la poche *stricto sensu* 1, comme il est représenté sur la figure 6.

Ou, il peut être prévu un (ou plusieurs) premier détecteur colorimétrique 12a situé dans le premier espace 1 et un (ou plusieurs) second détecteur colorimétrique 12b situé dans le second espace 9 hors de la poche *stricto sensu* 1, comme il est représenté sur la figure 7. Dans une telle réalisation, le premier détecteur 12a est responsif à un premier gaz traceur et le second détecteur 12b est responsif à un second gaz traceur, ces deux gaz traceurs étant bien entendu différents.

Une poche 2 à témoin de perte d'intégrité incorporé et actif est mise en oeuvre de la manière suivante : juste avant le moment prévu pour évacuer, extraire, sortir la poche *stricto sensu* 1 de la seconde enveloppe 8 et pour introduire le produit ou dispositif biopharmaceutique dans la poche *stricto sensu* 1, le détecteur colorimétrique 12 étant de la première couleur, ce qui signifie que la poche *stricto sensu* 1 a toute son intégrité, on ouvre les seconds moyens d'évacuation de la seconde enveloppe 8, on évacue, extrait sort, la poche *stricto sensu* 1 du second espace 9, on ouvre les premiers moyens d'introduction 7 de la poche *stricto sensu* 1 et on introduit le produit ou dispositif biopharmaceutique dans le premier espace 1. Ainsi, on dispose d'une poche *stricto sensu* 1 ayant toute son intégrité et contenant le produit ou dispositif biopharmaceutique. Cette poche *stricto sensu* 1 et le produit ou dispositif biopharmaceutique qu'elle contient sont alors aptes à l'emploi souhaité.

Dans le cas où le détecteur colorimétrique 1 est logé dans la poche *stricto sensu* 1, cette poche *stricto sensu* 1 résultant de la mise en oeuvre de la poche 2 à témoin de perte d'intégrité incorporé et actif, comporte le détecteur colorimétrique 12 en question, celui-ci étant de la première couleur. Comme indiqué précédemment, la poche *stricto sensu* 1 a été évacuée, extraite, sortie de la seconde enveloppe 8 et est alors apte à l'emploi.

Le procédé de réalisation d'une poche 2 à témoin de perte d'intégrité incorporé et actif est comme suit.

Tout d'abord, on dispose d'une première enveloppe 1 vide de produit ou dispositif biopharmaceutique, d'une seconde enveloppe 8, de moyens espaceurs 11, de gaz traceur et d'un détecteur colorimétrique 12 correspondant au gaz traceur.

Puis, on introduit la poche *stricto sensu* 1 dans la seconde enveloppe 8 et on interpose entre elles les moyens espaceurs 11, comme exposé.

Egalement, on introduit le gaz traceur dans l'espace 6 ou 9 hors de la poche *stricto sensu* 1 devant le recevoir et on place le détecteur colorimétrique 12 dans l'autre espace 9 hors de la poche *stricto sensu* 1 ou 6.

Finalement, on ferme la poche *stricto sensu* 1 et la seconde enveloppe 8.

Ce procédé peut faire l'objet de différentes variantes de réalisation correspondant aux variantes de la poche 2.

Ainsi, selon les réalisations, on dispose le détecteur colorimétrique 12 dans la poche *stricto* sensu 1 et on introduit le gaz traceur dans le second espace 9 hors de la poche *stricto sensu* 1 à une pression partielle plus élevée que l'ambiance du premier espace 1, ou, inversement, on dispose le détecteur colorimétrique 12 dans la seconde enveloppe 8, hors la poche *stricto sensu* 1, et on introduit le gaz traceur dans la poche *stricto sensu* 1 à une pression partielle plus élevée que l'ambiance du second espace 9, hors la poche *stricto sensu 1.*

Selon une réalisation, on introduit le gaz traceur dans un espace - premier espace 6 ou second espace 9 hors de la poche *stricto* sensu 1 - et on n'introduit pas le gaz traceur dans l'autre espace - second espace 9 hors de la poche *stricto sensu* 1 ou premier espace 6.

Selon une réalisation, on purge de l'air de l'espace 6, 9 contenant du gaz traceur à plus faible pression partielle ou sans gaz traceur.

Selon les réalisations, on dispose le détecteur colorimétrique 12 dans l'espace - premier ou second hors de la poche *stricto sensu*, 6 ou 9 - dans lequel il doit se trouver, de façon non fixe ou au contraire de façon fixe, par exemple en le fixant ou en l'incorporant à la face interne de la première enveloppe 1, à la face intérieure de la seconde enveloppe 8 ou aux moyens espaceurs 11.

Selon une réalisation, on place plusieurs détecteurs colorimétriques 12 en plusieurs emplacements de la poche 2, à savoir plusieurs détecteurs colorimétriques analogues dans le même espace, premier espace 6 ou second espace 9 hors de la poche *stricto sensu* 1, ou un premier détecteur colorimétrique 12a dans le premier espace 6 et un second détecteur colorimétrique 12b dans le second espace 9 hors de la poche *stricto sensu* 1.

Egalement, selon une réalisation, le procédé comporte une étape dans laquelle on place la seconde enveloppe 8 dans laquelle se trouve la poche *stricto sensu* 1 dans un suremballage extérieur de protection.

Le processus opératoire est donc tel qu'il comprend les étapes suivantes :
- la réalisation, sur le lieu de fabrication, d'une poche 2 à témoin de perte d'intégrité incorporé et actif comprenant la poche *stricto sensu* 1 ;
- le transport de la poche 2 du lieu de fabrication au lieu d'utilisation, moyennant le cas échéant des opérations de stockage et de manipulation,
- et, au moins sur le lieu d'utilisation et juste avant le moment prévu pour évacuer, extraire, sortir la poche *stricto sensu* 1 de la seconde enveloppe 8 et pour introduire le produit ou dispositif biopharmaceutique dans la poche *stricto sensu* 1, l'examen visuel par l'observateur extérieur de la couleur du détecteur colorimétrique 12 afin de constater s'il est de la première couleur ou s'il est de la seconde couleur. La poche *stricto sensu* 1 n'est utilisée pour le produit ou dispositif biopharmaceutique que si le détecteur colorimétrique 12 est de la première couleur, tandis que si le détecteur colorimétrique 12 est de la seconde couleur, la poche *stricto sensu* 1 n'est pas utilisée pour le produit ou dispositif biopharmaceutique.

Le détecteur colorimétrique 12 garde la première couleur ou passe de la première couleur à la seconde couleur en temps masqué lors des opérations intermédiaires de stockage, transport, manipulation.

## Revendications

1. Poche (2) à témoin de perte d'intégrité incorporé, actif per se et après la fabrication de la poche et au moins avant le moment prévu pour y introduire un produit ou dispositif biopharmaceutique, comprenant:
- une première enveloppe (1), intérieure, fermée, souple, en au moins une matière plastique non poreuse à haute capacité barrière aux gaz, délimitant un premier espace (6), formant stricto sensu une poche (1) apte à recevoir le produit ou dispositif biopharmaceutique lorsque souhaité mais vide de celui-ci, comportant d'une part des premiers moyens (7) d'introduction en vue de l'introduction ultérieure, lorsque souhaité, du produit ou dispositif biopharmaceutique dans la poche stricto sensu (1), et d'autre part des premiers moyens d'évacuation en vue de l'évacuation subséquente, lorsque souhaité, du produit ou dispositif biopharmaceutique de la poche stricto sensu (1), les premiers moyens (7) d'introduction et les premiers moyens d'évacuation se trouvant à l'état fermé inactif,
- une seconde enveloppe (8), extérieure, fermée, en au moins une matière plastique non poreuse à haute capacité barrière aux gaz, délimitant un second espace (9) dans lequel se trouve la poche stricto sensu (1) en vue de la détection d'une éventuelle perte d'intégrité de celle-ci, comportant d'une part des seconds moyens d'introduction ayant permis l'introduction préalable de la poche stricto sensu (1) dans le second espace (9), et d'autre part des seconds moyens d'évacuation en vue de l'évacuation de la poche stricto sensu (1) du second espace (9), les seconds moyens d'introduction et les seconds moyens d'évacuation se trouvant à l'état fermé inactif,
- des moyens (11) espaceurs interposés entre la poche stricto sensu (1) et la seconde enveloppe (8), aptes à ce que la face intérieure de la seconde enveloppe (8) n'occulte pas une quelconque zone d'éventuelle perte d'intégrité de la face externe de la poche stricto sensu (1), lesdits moyens (11) étant ou comportant du matériau poreux,
- au moins un gaz traceur choisi, situé, respectivement, dans le premier espace (6) ou dans le second espace (9) hors de la poche stricto sensu (1), avec une pression partielle plus grande que dans le second espace (9) hors de la poche stricto sensu (1) ou dans le premier espace (6),
- au moins un détecteur colorimétrique (12) du au moins un gaz traceur responsif à la concentration du au moins un gaz traceur dans l'ambiance dans lequel il se trouve, en passant d'une première couleur à une seconde couleur différente de la première couleur, le au moins un détecteur colorimétrique (12) étant situé, respectivement, dans le second espace (9) hors de la poche stricto sensu (1) ou dans le premier espace (6),
- de manière à pouvoir, à tout moment souhaité après la fabrication de la poche (2) et au moins juste avant le moment prévu pour évacuer, extraire, sortir la poche stricto sensu (1) de la seconde enveloppe (8) et pour introduire le produit ou dispositif biopharmaceutique dans la poche stricto sensu (1), interpréter le constat visuel que le au moins un détecteur colorimétrique (12) est soit de la première couleur comme significatif que la poche stricto sensu (1) a gardé son intégrité, soit de la seconde couleur comme significatif que la poche stricto sensu (1) a perdu son intégrité.

2. Poche (2) à témoin de perte d'intégrité incorporé et actif selon la revendication 1, **caractérisée par le fait qu'**au moins un détecteur colorimétrique (12) est logé dans le premier espace (6) formant la poche stricto sensu (1), le second espace (9) hors de la poche stricto sensu (1) ayant une ambiance comportant du gaz traceur à une pression partielle plus élevée que l'ambiance du premier espace (6).

3. Poche (2) à témoin de perte d'intégrité incorporé et actif selon la revendication 2, **caractérisée par le fait qu'**elle comporte au moins une paroi de séparation située dans le premier espace (6) formant la poche stricto sensu (1), présentant une perméabilité sélective, à savoir laissant passer le gaz traceur et ne laissant pas passer le produit ou dispositif biopharmaceutique, cette au moins une paroi de séparation délimitant seule ou avec la première enveloppe (1) au moins un premier compartiment dans lequel est logé le au moins un détecteur colorimétrique (12).

4. Poche (2) à témoin de perte d'intégrité incorporé et actif selon la revendication 1, **caractérisée par le fait qu'**au moins un détecteur colorimétrique (12) est logé dans le second espace (9) hors de la poche stricto sensu (1), le premier espace (6) formant la poche stricto sensu (1) ayant une ambiance comportant du gaz traceur à une pression partielle plus élevée que l'ambiance du second espace (9) hors de la poche stricto sensu (1).

5. Poche (2) à témoin de perte d'intégrité incorporé et actif selon la revendication 4, **caractérisée par le fait qu'**elle comporte au moins une paroi de séparation située dans le second espace (9) hors de la poche stricto sensu (1) délimitant seule ou avec la première ou la seconde enveloppe (8) au moins un second compartiment dans lequel est logé le au moins un détecteur colorimétrique (12).

6. Poche (2) à témoin de perte d'intégrité incorporé et actif selon l'une quelconque des revendications 1 à 5, **caractérisée par le fait que** la poche stricto sensu (1) est une poche 2D ou une poche 3D comportant au moins un gousset (4).

7. Poche (2) à témoin de perte d'intégrité incorporé et actif selon l'une quelconque des revendications 1 à 6, **caractérisée par le fait que** les moyens (11) espaceurs se présentent sous la forme d'au moins une couche poreuse ou en au moins un matériau poreux, en particulier réalisée en tissus, en non tissé, en PE, en PP, en PTFE, ou analogue.

8. Poche (2) à témoin de perte d'intégrité incorporé et actif selon la revendication 7, **caractérisée par le fait que** les moyens (11) espaceurs se présentent sous la forme d'au moins une couche poreuse ou en au moins un matériau poreux recouvrant intégralement structurellement ou fonctionnellement la face externe de la poche stricto sensu (1).

9. Poche (2) à témoin de perte d'intégrité incorporé et actif selon la revendication 8, **caractérisée par le fait que** la au moins une couche poreuse ou en au moins un matériau poreux recouvre intégralement structurellement ou fonctionnellement la face externe de l'intérieur du gousset de la poche stricto sensu (1), laquelle est une poche 3 D.

10. Poche (2) à témoin de perte d'intégrité incorporé et actif selon l'une quelconque des revendications 1 à 9, **caractérisée par le fait que** le au moins un détecteur colorimétrique (12) est disposé de façon non fixe dans l'espace - premier ou second hors de la poche stricto sensu (1) - dans lequel il se trouve.

11. Poche (2) à témoin de perte d'intégrité incorporé et actif selon l'une quelconque des revendications 1 à 9, **caractérisée par le fait que** le au moins un détecteur colorimétrique (12) est disposé de façon fixe dans l'espace - premier ou second hors de la poche stricto sensu (1) - dans lequel il se trouve.

12. Poche (2) à témoin de perte d'intégrité incorporé et actif selon la revendication 11, **caractérisée par le fait que** le au moins un détecteur colorimétrique (12) est fixé ou incorporé à la face interne de la première enveloppe (1), à la face intérieure de la seconde enveloppe (8) ou aux moyens (11) espaceurs.

13. Poche (2) à témoin de perte d'intégrité incorporé et actif selon l'une quelconque des revendications 1 à 12, **caractérisée par le fait qu'**un gaz traceur est choisi dans le groupe comprenant l'oxygène, le gaz carbonique, l'hélium.

14. Poche (2) à témoin de perte d'intégrité incorporé et actif selon l'une quelconque des revendications 1 à 13, **caractérisée par le fait que** le au moins un détecteur colorimétrique (12) est un organe autonome, dépourvu de source d'énergie interne et de connexions extérieures.

15. Poche (2) à témoin de perte d'intégrité incorporé et actif selon l'une quelconque des revendications 1 à 14, **caractérisée par le fait que** le au moins un détecteur colorimétrique (12) est surfaciquement étendu de manière à la fois à être responsif à la concentration en gaz traceur dans l'ambiance dans laquelle il se trouve et à ce qu'un observateur puisse constater visuellement s'il se trouve avoir la première couleur ou la seconde couleur.

16. Poche (2) à témoin de perte d'intégrité incorporé et actif selon l'une quelconque des revendications 1 à 15, **caractérisée par le fait que** le au moins détecteur colorimétrique (12) se trouve en un emplacement localisé de la poche, et/ou **par le fait qu'**elle comporte plusieurs détecteurs colorimétriques (12) en plusieurs emplacements de la poche, en particulier des détecteurs colorimétriques (12) au moins sensiblement répartis dans la poche.

17. Poche (2) à témoin de perte d'intégrité incorporé et actif selon la revendication 16, **caractérisée par le fait qu'**elle comporte plusieurs détecteurs colorimétriques (12) analogues dans le même espace, premier espace (6) ou second espace (9) hors de la poche stricto sensu (1).

18. Poche (2) à témoin de perte d'intégrité incorporé et actif selon l'une quelconque des revendications 16 et 17, **caractérisée par le fait qu'**elle comporte en premier lieu, d'une part, au moins un premier détecteur colorimétrique (12) responsif à la concentration en un premier gaz traceur et, d'autre part, au moins un second détecteur colorimétrique (12) responsif à la concentration en un second premier gaz traceur différent du premier gaz traceur et, en second lieu, d'une part, un premier gaz traceur dans le second espace (9) hors de la poche stricto sensu (1) avec une pression partielle plus grande que dans le premier espace (6), et, d'autre part, un second gaz traceur dans le premier espace (6) avec une pression partielle plus grande que dans le second espace (9) hors de la poche stricto sensu (1).

19. Poche (2) à témoin de perte d'intégrité incorporé et actif selon l'une quelconque des revendications 1 à 18, **caractérisée par le fait qu'**un espace - premier ou second espace (9) hors de la poche stricto sensu (1) - contient du gaz traceur et que l'autre espace - second espace (9) hors de la poche stricto sensu (1) ou premier espace (6) - ne comporte pas ou substantiellement pas de gaz traceur.

20. Poche (2) à témoin de perte d'intégrité incorporé et actif selon l'une quelconque des revendications 1 à 19, **caractérisée par le fait qu'**un détecteur colorimétrique (12) est en forme générale plate, plane ou incurvée, telle qu'une pastille ou une pseudo pastille ou en forme générale linéaire ou de bande, tout en étant rigide, flexible ou semi rigide semi flexible.

21. Poche (2) à témoin de perte d'intégrité incorporé et actif selon l'une quelconque des revendications 1 à 20, **caractérisée par le fait qu'**elle est aplatie ou sensiblement aplatie sur elle-même et ainsi aisément apte au stockage, au transport, à la manipulation.

22. Poche (2) à témoin de perte d'intégrité incorporé et actif selon l'une quelconque des revendications 1 à 21, **caractérisée par le fait que** la seconde enveloppe (8) extérieure est apte à permettre à un observateur extérieur d'identifier depuis l'extérieur de l'enveloppe extérieure (8) la couleur du au moins un détecteur colorimétrique (12).

23. Poche (2) à témoin de perte d'intégrité incorporé et actif selon la revendication 22, **caractérisée par le fait que** la seconde enveloppe (8) extérieure est transparente ou translucide ou comporte une fenêtre transparente ou translucide pour observer la couleur du au moins un détecteur colorimétrique (12) situé en regard ou au voisinage.

24. Poche (2) à témoin de perte d'intégrité incorporé et actif selon l'une quelconque des revendications 1 à 23, **caractérisée par le fait qu'**elle comporte en outre un suremballage extérieur de protection dans lequel est logé la seconde enveloppe (8) dans laquelle se trouve la poche stricto sensu (1).

25. Poche stricto sensu (1) ayant toute garantie d'intégrité, spécialement destinée à contenir un produit ou dispositif biopharmaceutique, **caractérisée par le fait qu'**elle est obtenue à partir d'une poche à témoin de perte d'intégrité incorporé et actif selon l'une quelconque des revendications 1 à 24, dans laquelle, le au moins un détecteur colorimétrique (12) étant de la première couleur, la poche stricto sensu (1) a été évacuée de la seconde enveloppe (8), la poche stricto sensu (1) étant alors aptes à l'emploi.

26. Procédé de réalisation d'une poche (2) à témoin de perte d'intégrité incorporé et actif selon l'une quelconque des revendications 1 à 24, dans lequel :
- on dispose d'une première enveloppe (1), souple, en au moins une matière plastique non poreuse à haute capacité barrière aux gaz, délimitant un premier espace (6), formant stricto sensu une poche apte à recevoir le produit ou dispositif biopharmaceutique lorsque souhaité mais vide de celui-ci, comportant d'une part des premiers moyens (7) d'introduction en vue de l'introduction ultérieure, lorsque souhaité, du produit ou dispositif biopharmaceutique dans la poche stricto sensu (1), et d'autre part des premiers moyens d'évacuation en vue de l'évacuation subséquente, lorsque souhaité, du produit ou dispositif biopharmaceutique de la poche stricto sensu (1),
- on dispose d'une seconde enveloppe (8), en au moins une matière plastique non poreuse à haute capacité barrière aux gaz, comportant d'une part des seconds moyens d'introduction en vue de l'introduction de la poche stricto sensu (1) dans le second espace (9), et d'autre part des seconds moyens d'évacuation en vue de l'évacuation de la poche stricto sensu (1) du second espace (9),
- on dispose de moyens (11) espaceurs,
- on dispose d'au moins un gaz traceur choisi,
- on dispose d'au moins un détecteur colorimétrique (12) du au moins un gaz traceur responsif à la concentration du au moins gaz traceur dans l'ambiance dans lequel il se trouve, en passant d'une première couleur à une seconde couleur différente de la première couleur,
- on introduit la poche stricto sensu (1) dans la seconde enveloppe (8) et on interpose entre elles les moyens (11) espaceurs de manière que la face intérieure de la seconde enveloppe (8) n'occulte pas une quelconque zone d'éventuelle perte d'intégrité de la face externe de la poche stricto sensu (1),
- on introduit le au moins un gaz traceur choisi, respectivement, dans le premier espace (6) ou dans le second espace (9) hors de la poche stricto sensu (1), avec une pression partielle plus grande que dans le second espace (9) hors de la poche stricto sensu (1) ou dans le premier espace (6), et on place le au moins un détecteur colorimétrique (12) du au moins un gaz traceur dans le second espace (9) hors de la poche stricto sensu (1) et/ou dans le premier espace (6), respectivement,
- et, finalement, on ferme la poche stricto sensu (1) et la seconde enveloppe (8).

27. Procédé selon la revendication 26, **caractérisé par le fait que** l'on dispose le au moins un détecteur colorimétrique (12) dans la poche stricto sensu (1), et on introduit le au moins un gaz traceur dans le second espace (9) hors de la poche stricto sensu (1) à une pression partielle plus élevée que l'ambiance du premier espace (6).

28. Procédé selon la revendication 27, **caractérisé par le fait que** l'on dispose le au moins un détecteur colorimétrique (12) dans la seconde enveloppe (8) hors de la poche stricto sensu (1), et on introduit le au moins un gaz traceur dans la poche stricto sensu (1) à une pression partielle plus élevée que l'ambiance du premier espace (6).

29. Procédé selon l'une quelconque des revendications 26 à 28, **caractérisé par le fait que** l'on dispose le au moins un détecteur colorimétrique (12) de façon non fixe dans l'espace - premier ou second - dans lequel il doit se trouver.

30. Procédé selon l'une quelconque des revendications 26 à 28, **caractérisé par le fait que** l'on dispose le au moins un détecteur colorimétrique (12) de façon fixe dans l'espace - premier ou second - dans lequel il doit se trouver, en le fixant ou incorporant à la face interne de la première enveloppe (1), à la face intérieure de la seconde enveloppe (8) ou aux moyens (11) espaceurs.

31. Procédé selon l'une quelconque des revendications 26 à 30, **caractérisé par le fait que** l'on place la seconde enveloppe (8) dans laquelle se trouve la poche stricto sensu (1) dans un suremballage extérieur de protection.

32. Processus relatif aux poches stricto sensu (1) spécialement destinée à contenir un produit ou dispositif biopharmaceutique et devant présenter toute garantie d'intégrité, le processus comprenant, sur un lieu de fabrication, des opérations initiales consistant à fabriquer la poche stricto sensu (1), sur un lieu d'utilisation, des opérations finales consistant à utiliser la poche stricto sensu (1) en y plaçant lorsque souhaité le produit ou dispositif biopharmaceutique et en assurant le traitement souhaité, et des opérations intermédiaires de stockage, transport, manipulation, **caractérisé par** :
- la réalisation, sur le lieu de fabrication, d'une poche à témoin de perte d'intégrité incorporé et actif comprenant la poche stricto sensu (1), selon l'une quelconque des revendications 26 à 31,
- le transport de la poche à témoin de perte d'intégrité incorporé et actif comprenant la poche stricto sensu (1) du lieu de fabrication au lieu d'utilisation, moyennant le cas échéant des opérations de stockage et de manipulation,
- et, au moins sur le lieu d'utilisation et juste avant le moment prévu pour évacuer, extraire, sortir la poche stricto sensu (1) de la seconde enveloppe (8) et pour introduire le produit ou dispositif biopharmaceutique dans la poche stricto sensu (1), l'examen visuel de la couleur du au moins un détecteur colorimétrique (12) afin de constater si le au moins un détecteur colorimétrique (12) est de la première couleur ou de la seconde couleur, la poche stricto sensu (1) n'étant utilisée pour le produit ou dispositif biopharmaceutique que si le au moins un détecteur colorimétrique (12) est de la première couleur, tandis que si le au moins un détecteur colorimétrique (12) est de la seconde couleur, la poche stricto sensu (1) n'est pas utilisée pour le produit ou dispositif biopharmaceutique.

## Claims

1. A bag (2) with an integrated tamper indicator, active per se and after the manufacturing of the bag and at least before the time scheduled for introducing therein a biopharmaceutical material or device that includes:
- a first flexible closed inner casing (1) made of at least one non-porous plastic material having a high barrier capacity to gases and delimiting a first space (6) forming stricto sensu a bag (1) capable of receiving the biopharmaceutical material or device when so desired but containing none, including on the one hand first production means (7) for the subsequent introduction, when so desired, of the biopharmaceutical material or device into the stricto sensu bag (1) and on the other hand first removing means for the subsequent removal, when so desired, of the biopharmaceutical material or device from the stricto sensu bag (1), the first introduction means (7) and the first removing means being in the inactive closed state,
- a second closed outer casing (8) made of at least one non-porous plastic material having a high barrier capacity to gases and defining a second space (9) in which the stricto sensu bag (1) is arranged, for detecting a possible tamper thereof, including on the one hand second introduction means heaving enabled the previous introduction of the stricto sensu bag (1) into the second space (9), and on the other hand second removing means for removing the stricto sensu bag (1) from the second space (9), the second introduction means (7) and the second removing means being in the inactive closed state,
- spacing means (11), interposed between the stricto sensu bag (1) and the second causing (8), adopted so that the inner face of the second casing (8) will not hide any zone of possible tamper of the outer face of the stricto sensu bag (1), said means (11) being made of or including porous material,
- at least one selected tricing gas provided, respectively, in the first space (6) or in the second space (9) outside the stricto sensu bag (1), with a higher partial pressure than in the second space (9) outside the stricto sensu bag (1) or in the first space (6),
- at least one colorimetric detector (12) of the at least one tracing gas reacting to the concentration of the at least one tracing gas in the atmosphere in which it is arranged, by stitching from a first color to a second different color, the at least one colorimetric detector (12) bering provided, respectively, in the second space (9) outside the strict sensu bag (1) or in the first space (6),
- so as to be able, at any desired time after the manufacturing of the bag (2) and at least just before the time scheduled for removing, extracting, taking the stricto sensu bag (1) out of the second casing (8) and for introducing the biopharmaceutical material or device into the stricto sensu bag (1), interpret the visual observation that the at least one colorimetric detector (12) is either of the first color which means that the stricto sensu bag (1) has not been tampered, or of the second color which means that the stricto sensu bag (1) has been tampered.

2. A bag (2) with an integrated active tamper indicator, according to claim 1, characterize in that at least one colorimetric detector (12) is located in the first space (6) forming the stricto sensu bag (1), the second space (9) outside the stricto sensu bag (1) having an atmosphere including tracing gas with a higher partial pressure than the atmosphere of the first space (6).

3. A bag (2) with an integrated active tamper indicator, according to claim 2, **characterized in that** it includes at least one partition wall arranged in the first space (6) forking the stricto sensu bag (1), having a selective permeability, i.e. allowing the tracing gas to pass through and not hallowing the biopharmaceutical material or device to pass through, such at least one partition wall delimiting, alone or with the first casing (1) at least a first compartment wherein the at least one colorimetric detector (12) is arranged.

4. A bag (2) with an integrated active tamper indicator, according to claim 1, **characterized in that** at least one colorimetric detector (12) is arranged in the second space (9) outside the stricto sensu bag (1), the first space (6) forming the stricto sensu bag (1), having an atmosphere including a tracing gas with a higher partial pressure than of the atmosphere in the second space (9) outside the stricto sensu bag (1).

5. A bag (2) with an integrates active tamper indicator, according to claim 4, **characterized in that** it includes at least one partition wall arranged in the second space (9) outside the stricto sensu bag (1) delimiting alone or with the first or the second casing (8) at least one second compartment wherein at least one colorimetric detector (12) is arranged.

6. A bag (2) with an integrated active tamper indicator, according to anyone of claims 1 to 5, **characterized in that** the stricto sensu bag (1) is a 2D bag or a 3D bag including at least one gusset (4).

7. A bag (2) with an integrated active tamper indicator, according to any one of claims 1 to 6, **characterized in that** the spacing means (11) have the form of at least one porous layer or made of at least a porous material, more particularly made of fabrics, non woven fabrics, PE, PP, PTFE or the like.

8. A bag (2) with an integrated active tamper indicator, according to claim 7, **characterized in that** the spacing means (11) have the form of at least one porous layer or made of at least a porous material structurally or functionally integrally covering the outer face of the stricto sensu bag (1).

9. A bag (2) with an integrated active tamper indicator, according to claim 8, **characterized in that** the at least one porous layer or made of at least a porous material structurally or functionally integrally covers the outer face of the inside of the gusset of the stricto sensu bag (1), which is a 3D bag.

10. A bag (2) with an integrated active tamper indicator, according to any one of claims 1 to 9, **characterized in that** the at least one colorimetric detector (12) is removably placed in the first or second space outside the stricto sensu bag (1) wherein it is arranged.

11. A bag (2) with an integrated active tamper indicator, according to any one of claims 1 to 9, **characterized in that** the at least one colorimetric detector (12) is fixed in the - first or second - space outside the strict sensu bag (1) wherein it is arranged.

12. A bag (2) with an integrated active tamper indicator, according to claim 11, **characterized in that** the at least one colorimetric detector (12) is fixed on or integrated in the inner face of the first casing (1), in the inner face of the second casing (8) or in the spacing means (11).

13. A bag (2) with an integrated active tamper indicator, according to any one of claims 1 to 12, **characterized in that** a tracking gas is selected from the group including oxygen, carbon dioxide, helium.

14. A bag (2) with an integrated active tamper indicator, according to any one of claims 1 to 13, **characterized in that** the at least one colorimetric detector (12) is an autonomous element with no inner power supply and no external connection.

15. A bag (2) with an integrated active tamper indicator, according to any one of claims 1 to 14, **characterized in that** the at least one colorimetric detector (12) has an extended surface so as to be both redacting to the concentration of the at least one tracing gas in the atmosphere wherein it is arranged and so that an observer can visually observe whether it has a first color or a second color.

16. A bag (2) with an integrated active tamper indicator, according to any one of claims 1 to 15, **characterized in that** the at least one colorimetric detector (12) is arranged in a localized place in the bag and/or **in that** it includes several colorimetric detectors (12) in several places in the bag, more particularly colorimetric detectors (12) at least substantially distributed in the bag.

17. A bag (2) with an integrated active tamper indicator, according to claim 16, **characterized in that** it includes several analog colorimetric detectors (12) in the sam space, the first space (6) or the second space (9) outside the stricto sensu bag (1).

18. A bag (2) with an integrated active tamper indicator, according to any one of claims 16 and 17, **characterized in that** it firstly comprises, on the one hand at least one colorimetric detector (12) reacting to the concentration of the at least one tracing gas and, on the other hand at least one second colorimetric detector (12) reacting to the concentration of a second tracing gas different from the first racing gas, and secondly, on the one hand a first tracing gas in the second space (9) outside the stricto sensu bag (1) with a higher partial pressure than in the first space (6) and on the other hand a second tracing gas in the first space (6 with a higher partial pressure than in the second space (9) outside the stricto sensu bag (1).

19. A bag (2) with an integrated active tamper indicator, according to any one of claims 1 to 18, **characterized in that** one space - the first or the second space (9) outside the stricto sensu bag (1) - contains a tracing gas and **in that** the other space - the second space (9) outside the stricto sensu bag (1) or the first space (6) - includes no or substantially no tricing gas.

20. A bag (2) with an integrated active tamper indicator, according to any one of claims 1 to 19, **characterized in that** one colorimetric detector (12) has a general flat, plane or curved shape, such as a pellet or a pseudo-pellet or a general linear or trip serape, while being rigid, flexible or semi-rigid semi-flexible.

21. A bag (2) with an integrated active tamper indicator, according to any one of claims 1 to 20, **characterized in that** it is flat or substantially slat and thus easily suitable for storage, transporting or handling.

22. A bag (2) with an integrated active tamper indicator, according to any one of claims 1 to 21, **characterized in that** the second outer casing (8) is able to allow an external observer to identify the color of the at least one colorimetric detectors (12) from the outside of the outer casing (8).

23. A bag (2) with an integrated active tamper indicator, according to claim 22, **characterized in that** the second outer casing (8) is transparent or translucent or include a transparent or translucent window to observe the color of the at least one colorimetric detector (12) located opposite thereto or in the vicinity thereof.

24. A bag (2) with an integrated active tamper indicator, according to any one of claims 1 to 23, **characterized in that** it further comprises an outer protective over packaging wherein the second casing (8) is arranged, wherein the stricto sensu bag (1) is arranged.

25. A stricto sensu bag (1) with a no-tamper guarantee, specially intended for containing a biopharmaceutical material or device, **characterized in that** it is obtained from a bag with an integrated active tamper indicator, according to any one of claims 1 to 24, wherein, as the at least one colorimetric detector (12) being of the first color, the stricto sensu bag (1) was removed from the second casing (8), with the stricto sensu bag (1) then being ready for use.

26. A method for making a bag (2) with an integrated active tamper indicator, according to any one of claims 1 to 24, wherein:
- is provided a first flexible casing (1) made of at least one non-porous plastic material having a high barrier capacity to gases and delimiting a first space (6) forming stricto sensu a bag (1) capable of receiving the biopharmaceutical material or devise when so desired but containing none, including on the one hand first introduction means (7) for the subsequent introduction, when so desired, of the biopharmaceutical material or device into the stricto sensu bag (1) and on the other hand first removing means for subsequently removing, when so desired, the biopharmaceutical material or device from the stricto sensu bag (1),
- is provided a second casing (8) made of at least one non-porous plastic material having a high barrier capacity to gases, including on the one hand second introduction means for the introduction of the stricto sensu bag (1) into the second space (9), and on the other hand second removing means for removing the stricto sensu bag (1) from the second space (9),
- are provide spacing means (11),
- is provide at least one selected tracing gas,
- is provided at least one colorimetric detector (12) of the at least one tracing gas reacting to the concentration of the at least one tracing gas in the atmosphere in which it is arranged, by switching from a first color to a second different color,
- the strict sensu bag (1) is introduces intro the second casing (8) and the spacing means (11) are inserted therebetween so that the inner face of the second casing (8) will not hide any zone of possible tamper of the outer face of the stricto sense bag (1),
- the at least one tracing gas is respectively introduced into the first space (6) or the second space (9) outside the strict sensu bag (1), with a higher partial pressure than in the second space (9) outside the stricto sensu bag (1) or into the first space (6), and the at least one colorimetric detector (12) of the at least one tracing gas into the second space (9) outside the stricto sensu bag (1) and/or into the first space (6), respectively,
- and finally, the stricto sensu bag (1) and the second casing (8) are closed.

27. A method according to claim 26, **characterized in that** the at least one colorimetric detector (12) is placed in the stricto sensu bag (1) and the at least one tracing gas is introduced into the second space (9) outside the stricto sensu bag (1) with a higher partial pressure than of the atmosphere in the first space (6).

28. A method according to claim 27, **characterized in that** the at least one colorimetric detector (12) is placed in the second casing (8) outside the stricto sensu bag (1) and the at least one tracing gas is introduced into the stricto sensu bag (1) with a higher partial pressure than of the atmosphere in the first space (6).

29. A method according to any one of claims 26 to 28, **characterized in that** the at least one colorimetric detector (12) is removably placed in the - first or second - space wherein it must be arranged.

30. A method according to any one of claims 26 to 28, **characterized in that** the at least one colorimetric detector (12) is fixed in the - first or second - space wherein it must be arranged, being fixed on or integrated in the inner face of the first casing (1), in the inner face of the second casing (8), or the spacing means (11).

31. A method according to any one of claims 26 to 30, **characterized in that** the second casing (8) wherein the stricto sensu bag (1) is arranged is placed in an outer protective over packaging.

32. A process relative to stricto sensu bags (1) specially intended for containing a biopharmaceutical material or device and showing a no-tamper guarantee, with the process including, in a manufacturing place, initial operations consisting in manufacturing the stricto sensu bag (1) in a place of use, final operations consisting in using the stricto sensu bag (1) by placing therein, when so desired, the biopharmaceutical material or device and by providing the desired processing, and intermediate storage, transportation, handling operations, **characterized in that** :
- manufacturing, on a site of manufacturing, a bag with an integrated active tamper indicator, according to any one of claims 26 to 31,
- transporting the bag with an integrated active tamper indicator, including the stricto sensu bag (1) is transported from the site of manufacturing to the site of use, by means of, if necessary, storage and handling operations,
- and at least on the site of use and just before the time scheduled for discharging, extracting, taking the stricto sensu bag (1) out of the second casing (8) and for introducing the biopharmaceutical material or device into the inner casing (1), the visual observation of the color of the at least colorimetric detector (12) in order to observe if the at least one colorimetric detector (12) is of the first color or the second color, and the stricto sensu bag (1) being used for the biopharmaceutical material or device only if the at least colorimetric detector (12) is of the first color, whereas if the at least one colorimetric detector (12) is of the second color, the stricto sensu bag (1) is not used for the biopharmaceutical material or device.

## Patentansprüche

1. Beutel (2) mit integriertem Unversehrtheitsanzeiger, per se aktiv und nach Herstellung des Beutels, und zumindest vor dem vorgesehenen Zeitpunkt für die Einführung eines/einer biopharmazeutischen Produkts/Vorrichtung, mit:
- einem ersten Mantel (1), innen, geschlossen, flexibel aus mindestens einem nicht poröse Kunststoff mit hoher Gassperrfähigkeit, der einen ersten Raum (6) angrenzt, der einen Beutel an sich (1) bildet, der auf Wunsch das/die biopharmazeutische Produkt/Vorrichtung aufnehmen kann, der aber leer ist, mit einerseits ersten Einführungsmitteln (7) für die spätere Einführung, auf Wunsch des/der biopharmazeutischen Produkts/Vorrichtung in den Beutel an sich (1), und andererseits ersten Entnahmemittel für die spätere Entnahme, auf Wunsch, des/der biopharmazeutischen Produkts/Vorrichtung aus dem Beutel an sich (1), wobei die ersten Einführungsmittel (7) und die ersten Entnahmemittel im inaktive geschlossenen Zustand sind,
- einem zweiten Mantel (8), außen, geschlossen, aus mindestens einem nicht porösen Kunststoff mit hoher Gassperrfähigkeit, der einen zweiten Raum (9) angrenzt, in dem sich der Beutel an sich (1) befindet, für die Erkennung eines eventuellen Versehrtheitsverlustes desselben, mit einerseits zweiten Einführungsmitteln, die die vorherige Einführung des Beutels an sich (1) in den zweiten Raum (9) ermöglicht haben, und andererseits zweiten Entnahmemittels für die Entnahme des Beutels an sich (1) aus dem zweiten Raum (9), wobei die zweiten Einführungsmittel und die zweiten Entnahmemittel im inaktiven geschlossenen Zustand sind,
- Abstandhaltemitteln (11), die zwischen dem Beutel an sich (1) und dem zweiten Mantel (8) angeordnet sind und dazu dienen, dass die Innenseite des zweiten Mantels (8) nicht eine beliebige, einen eventuellen Versehrtheitsverlust aufweisende Zone des Beutels an sich (1) bedeckt, wobei die genannten Mittel (11) aus porösem Material bestehen oder welches enthalten,
- mindestens einem gewählten Prüfgas, das sich jeweils im ersten Raum (6) oder im zweiten Raum (9) außerhalb des Beutels an sich (1) befindet, mit grösserem Teildruck als im zweiten Raum (9) außerhalb des Beutels an sich (1) oder im ersten Raum (6),
- mindestens einem kolorimetrischen Sensor (12) des mindestens einem Prüfgases, der auf die Konzentration des mindestens einen Prüfgases in der Atmosphäre, in der er sich befindet, reagiert, indem er von einer ersten Farbe auf eine zweiten Farbe übergeht, die sich von der ersten Farbe unterscheiden, wobei der mindestens eine kolorimetrische Sensor (12) jeweils im zweiten Raum (9) außerhalb des Beutels an sich (1) oder im ersten Raum (6) angeordnet ist,
- so dass man jederzeit nach der Herstellung des Beutels (2) und zumindest kurz vor dem Zeitpunkt, der für die Entnahme des Beutels an sich (1) aus dem zweiten Mantel (8) und für die Einführung des/der biopharmazeutischen Produkts/Vorrichtung in den Beutel an sich (1) vorgesehen ist, die visuelle Feststellung interpretieren kann, dass der mindestens eine kolorimetrische Sensor (12) entweder die erste Farbe aufweist, um anzuzeigen, dass der Beutel an sich (1) seine Unversehrtheit bewahrt hat, oder die zweite Farbe, die anzeige, dass der Beutel an sich (1) seine Unversehrtheit verloren hat.

2. Beutel (2) mit integriertes und aktivem Unversehrtheitsanzeiger gemäß Anspruch 1, **dadurch gekennzeichnet, dass** mindestens ein kolorimetrischer Sensor (12) in einem ersten Raum (6) angeordnet ist, der den Beutel an sich (1) bildet, wobei der zweite Raum (9) außerhalb des Beutels an sich (1) eine Atmosphäre hat mit Prüfgas mit einem grösseren Teildruck als die Atmosphäre des ersten Raums (6).

3. Beutel (2) mit integriertem und aktivem Unversehrtheitsanzeiger gemäß Anspruch 2, **dadurch gekennzeichnet, dass** er mindestens eine Trennwand umfasst, die im ersten Raum (6) angeordnet ist, der den Beutel an sich (1) bildet, mit einer selektiven Durchlässigkeit, d.h. die das Testgas durchlässt aber nicht das/die biopharmazeutische Produkt/Vorrichtung, wobei die mindestens ein Trennwand allen oder mit dem ersten Mantel (1) mindestens ein erstes Anteil angrenzt, in dem der mindestens eine kolorimetrische Sensor (12) angeordnet ist.

4. Beutel (2) mit integriertem und aktivem Unversehrtheitsanzeiger gemäß Anspruch 1, **dadurch gekennzeichnet, dass** der mindestens eine kolorimetrische Sensor (12) im zweiten Raum (9) außerhalb des Beutels an sich (1) angeordnet ist, wobei der erste, den Beutel an sich (1) bildende Raum (6) eine Atmosphäre hat, die das Testgas enthält, das einen grösseren Teildruck hat als die Atmosphäre des zweiten Raums (9) außerhalb des Beutels an sich (1).

5. Beutel (2) mit integriertem und aktivem Unversehrtheitsanzeiger gemäß Anspruch 4, **dadurch gekennzeichnet, dass** er mindestens eine Trennwand umfasst, die im zweiten Raum (9) außerhalb des Beutels an sich (1) angeordnet ist und allein oder mit dem ersten oder dem zweiten Mantel (8) mindestens ein zweites Abteil angrenzt, in dem der mindestens eine kolorimetrische Sensor (12) angeordnet ist.

6. Beutel (2) mit integriertem und aktivem Unversehrtheitsanzeiger gemäß einem der Ansprüche 1 bis 5, **dadurch gekennzeichnet, dass** der Beutel an sich (1) ein 2D- oder 3D-Beutel ist, der mindestens einen Wickel (4) aufweist.

7. Beutel (2) mit integriertem und aktivem Unversehrtheitsanzeiger gemäß einem der Ansprüche 1 bis 6, **dadurch gekennzeichnet, dass** die Abstandhaltemittel (11) aus mindestens einer porösen Schicht oder mindestens einem porösen Material bestehen, insbesondere aus Stoff, Vlies, PE, PP, PTFE oder dergleichen.

8. Beutel (2) mit integriertem und aktivem Unversehrtheitsanzeiger gemäß einem der Ansprüche 1 bis 6, **dadurch gekennzeichnet, dass** die Abstandhaltemittel (11) aus mindestens einer porösen Schicht oder mindestens einem porösen Material bestehen, die die Außenweite des Beutels an sich (1) strukturell oder funktionell vollständig abdecken.

9. Beutel (2) mit integriertem und aktivem Unversehrtheitsanzeiger gemäß Anspruch 8, **dadurch gekennzeichnet, dass** die mindestens eine poröse Schicht oder das mindestens eine poröse material die Außenseite des Inneren des Zwickels des Beutels an sich (1), der ein 3D-Beutel ist, strukturell oder funktionell vollständig abdeckt.

10. Beutel (2) mit integriertem und aktivem Unversehrtheitsanzeiger gemäß einem der Ansprüche 1 bis 9, **dadurch gekennzeichnet dass** der mindestens eine kolorimetrische Sensor (12) nicht ortsfest in dem Raum erster oder zweiter außerhalb des Beutels an sich (1) - angeordnet ist, in dem er sich befindet.

11. Beutel (2) mit integriertem und aktivem Unversehrtheitsanzeiger gemäß einem der Ansprüche 1 bis 9, **dadurch gekennzeichnet, dass** der mindestens eine kolorimetrische Sensor (12) ortsfest in dem Raum - erster oder zweiter außerhalb des Beutels an sich (1) - angeordnet ist, in dem er sich befindet.

12. Beutel (2) mit integriertem und aktivem Unversehrtheitsanzeiger gemäß Anspruch 11, **dadurch gekennzeichnet, dass** der mindestens eine kolorimetrische Sensor (12) an der Innenseite des ersten Mangels (1), der Innenseite des zweiten Mantels (8) oder an den Abstandhaltemitteln (11) befestigt oder dort eingebaut ist.

13. Beutel (2) mit integriertem und aktivem Unversehrtheitsanzeiger gemäß einem der Ansprüche 1 bis 12, **dadurch gekennzeichnet, dass** ein Testgas aus der Gruppe Sauerstoff, Kohlendioxid, Helium gewählt wird.

14. Beutel (2) mit integriertem und aktivem Unversehrtheitsanzeiger gemäß den Ansprüchen 1 bis 13, **dadurch gekennzeichnet, dass** der mindestens eine kolorimetrische Sensor (12) ein selbstständiges Organ, intern Energiequelle und externe Abschlüsse, ist.

15. Beutel (2) mit integriertem und aktivem Unversehrtheitsanzeiger gemäß einem der Ansprüche 1 bis 14, dadurch gekennzeichet, dass der mindestens eine kolorimetrische Sensor (12) oberflächlich so ausgestreckt ist, dass er gleichzeitig auf die Testgaskonzentration in der Atmosphäre reagiert, in der er sich befindet, und dass ein Betrachter visuell feststellen kann, ob er die erste Farbe oder die zweite Farbe aufweist.

16. Beutel (2) mit integriertem und aktivem Unversehrtheitsanzer gemäß einem der Ansprüche 1 bis 15, **dadurch gekennzeichnet, dass** der mindestens eine kolorimetrische Sensor (12) an einem im Beutel gelegenen Platz sitzt, und/oder dadurch, dass er mehrere kolorimetrische Sensoren (12) an mehreren Plätzen des Beutels umfasst, insbesondere kolorimetrische Sensoren (12), die zumindest etwa gleich über den Beutel verteilt sind.

17. Beutel (2) mit integriertem und aktivem Unversehrtheitsanzeiger gemäß Anspruch 16, **dadurch gekennzeichnet, dass** er mehrere analoge kolorimetrische Sensoren (12) im selben Raum umfasst, im ersten Raum (6) oder im zweiten Raum (9) außerhalb des Beutels an sich (1).

18. Beutel (2) mit integriertem und aktivem Unversehrtheitsanzeiger gemäß einem der Ansprüche 16 und 17, **dadurch gekennzeichnet, dass** er erstens einerseits mindestens einen ersten kolorimetrischen Sensor (12) umfasst, der auf eine erste Testgaskonzentration reagiert, und andererseits mindestens einen zweiten kolorimetrischen Sensor (12), der auf eine zweite Testgaskonzentration reagiert, die sich vom ersten Testgas unterscheiden, und zweitens einerseits ein erstes Testgas im zweiten Raum (9) außerhalb des Beutels an sich (1) mit einem größeren Teildruck als im ersten Raum (6), und andererseits ein zweites Testgas im ersten Raum (6) mit einem größeren Teildruck als im zweiten Raum (9) außerhalb des Beutels an sich (1).

19. Beutel (2) mit integriertem und aktivem Unversehrtheitsanzeiger gemäß einem der Ansprüche 1 bis 18, **dadurch gekennzeichnet, dass** ein Raums - erster oder zweiter Raum (9) außerhalb des Beutels an sich (1) - ein Testgas enthält, und dass der andere Raum - zweiter Raum (9) außerhalb des Beutels an sich (1) oder der erste Raum (6) - kein oder substantiell kein Testgas enthält.

20. Beutel (2) mit integriertem und aktivem Unversehrtheisanzeiger gemäß einem der Ansprüche 1. bis 19, **dadurch gekennzeichnet, dass** ein kolorimetrischer Sensor eine im Allgemeinen flache, plane oder gekrümmte Form wie eine Pastille oder Pseudo-Pastille aufweist, oder eine im Allgemeinen lineare oder streifenartige Form, wobei er steif, flexibel oder halbsteif halbflexibel ist.

21. Beutel (2) mit integriertem und aktivem Unversehrtheitsanzeiger gemäß einem der Ansprüche 1 bis 20, **dadurch gekennzeichnet, dass** er flachgedrückt oder etwa flachgedrückt ist und somit leicht gelagert, transportiert, gehandhabt werden kann.

22. Beutel (2) mit integriertem und aktivem Unversehrtheitsanzeiger gemäß einem der Ansprüche 1 bis 21, **dadurch gekennzeichnet dass** der zweite Außenmantel (8) es einem externen Betrachter ermöglichen kann, von Außen des Außenmantels (8) die Farbe des mindestens einen kolorimetrischen Sensors (12) zu identifizieren.

23. Beutel (2) mit integriertem und aktivem Unversehrtheitsanzeiger gemäß Anspruch 22, **dadurch gekennzeichnet, dass** der zweite Außenmantel (8) durchsichtig oder durchscheinend ist oder ein durchsichtiges oder durchscheinendes Fenster aufweist, um die Farbe des mindestens einen kolorimetrischen Sensors (12) zu erkennen, der gegenüber oder in der Nähe angeordnet ist.

24. Beutel (2) mit integriertem und aktivem Unversehrtheitsanzeiger gemäß einem der Ansprüche 1 bis 23, **dadurch gekennzeichnet, dass** er ferner eine Schutz-Umverpackung aufweist, in der der zweite Mantel (8) sitz, in dem sich der Beutel an sich (1) befindet.

25. Beutel an sich (1) mit voller Unversehrtheitsgarantie, speziell dafür bestimmt, ein/eine biopharmazeutische(s) Produkt/Vorrichtung zu enthalten, **dadurch gekennzeichnet, dass** er mittels eines Beutels mit integriertem und aktivem Unversehrtheitsanzeiger gemäß einem der Ansprüche 1 bis 24 erhalten wird, bei dem, wobei der mindestens eine kolorimetrische Sensor (12) die erste Farbe aufweist, der Beutel an sich (1) aus dem zweiten Mantel (8) entnommen wurde, wobei der Beutel an sich (1) dann gebrauchsbereit ist.

26. Herstellungsverfahren eines Beutels (2) mit integriertem und aktivem Unversehrtheitsanzeiger gemäß einem der Ansprüche 1 bis 24, bei dem:
- man über einen ersten Mantel (1), flexibel aus mindestens einem nicht porösen Kunststoff mit hoher Gassperrfähigkeit, der einen ersten Raum (6) angrenzt, der einen Beutel an sich bildet, der auf Wunsch das/die biopharmazeutische Produkt/Vorrichtung aufnehmen kann, aber leer ist, mit einerseits ersten Einführungsmitteln (7) für die spätere Einführung, auf Wunsch, des/der biopharmazeutischen Produkts/Vorrichtung in den Beutel an sich (1), und andererseits ersten Entnahmemittels für die spätere Entnahme, auf Wunsch, des/der biopharmazeutischen Produkts/Vorrichtung aus dem Beutel an sich (1) verfügt,
- man über einen zweiten Mantel (8), aus mindestens einem nicht porösen Kunststoff mit hoher Gassperrfähigkeit, mit einerseits zweiten Einführungsmitteln für die Einführung des Beutels an sich (1) in den zweiten Raum (9), und andererseits zweiten Entnahmemitteln für die Entnahme des Beutels an sich (1) aus dem zweiten Raum (9) verfügt,
- man über Abstandhaltemittel (11) verfügt,
- man über mindestens ein gewähltes Testgas verfügt,
- man über mindestens einen kolorimetrischen Sensor (12) des mindestens einen Prüfgases, der auf die Konzentration des mindestens einen Prüfgases in der Atmosphäre, in der er sich befindet, reagiert, indem er von einer ersten Farbe auf eine zweite Farbe übergeht, die sich von der ersten Farbe unterscheidet verfügt,
- man den Beutel an sich (1) in den zweiten Mantel (8) einführt, und man dazwischen die Abstandhaltemittel (11) derart anordnet, dass die Innenseite des zweiten Mantels (8) nicht eine beliebige eventuelle Versehrtheitsverlustzone an der Außenseite des Beutels an sich (1) abdeckt,
- man das mindestens eine gewählte Testgas in den ersten Raum (6) oder in den zweiten Raum (9) außerhalb des Beutels an sich (1) eingibt, mit einem größeren Teildruck als im zweiten Raum (9) außerhalb des Beutels an sich (1), oder in den ersten Raum (6), und man den mindestens einen kolorimetrischen Sensor (12) des mindestens einem Testgases im zweiten Raum (9) außerhalb des Beutels an sich (1) anordnen, und/oder jeweils ersten Raum (6),
- und man schließlich den Beutel an sich (1) und den zweiten Mantel (8) schließt.

27. Verfahren gemäß Anspruch 26, **dadurch gekennzeichnet, dass** man den mindestens einen kolorimetrischen Sensor (12) im Beutel an sich (1) anordnet, und man das mindestens eine Testgas in den zweiten Raum (9) außerhalb des Beutels an sich (1) eingibt, mit einem größeren Teildruck als die Atmosphäre des ersten Raums (6).

28. Verfahren gemäß Anspruch 27, **dadurch gekennzeichnet, dass** man den mindestens einen kolorimetrischen Sensor (12) im zweiten Mantel (8) außerhalb des Beutels an sich (1) anordnet, und man das mindestens eine Testgas, mit einem größeren Teildruck als die Atmosphäre des ersten Raums (6), in den Beutel an sich (1) eingibt.

29. Verfahren gemäß einem der Ansprüche 26 bis 28, **dadurch gekennzeichnet, dass** man den mindestens einen kolorimetrischen Sensor (12) nicht ortsfest in dem Raum - erster oder zweiter - anordnet, in dem er sich befinden soll.

30. Verfahren gemäß einem der Ansprüche 26 bis 28, dadurch gekennzeichet, dass man den mindestens einen kolorimetrischen Sensor (12) ortsfest in dem Raum - erster oder zweiter - anordnet, in dem er sich befinden soll, durch seine Befestigung oder seinen Einbau an der Innenseite des ersten Mantels (1), an der Innenseite des zweiten Mantels (8) oder an den Abstandhaltemitteln (11).

31. Verfahren gemäß einem der Ansprüche 26 bis 30, **dadurch gekennzeichnet, dass** man den zweiten Mantel (8), in dem sich der Beutel an sich (1) befindet, in eine äußere Schutz-Umverpackung platziert.

32. Prozess bezüglich der Beutel an sich (1), die speziell dazu bestimmt sind, ein/eine biopharmazeutische (s) Produkt/Vorrichtung zu enthalten, und die alle Unversehrtheitsgarantien aufweisen müssen, wobei der Prozess an einem Fabrikationsort Anfangsoperationen umfasst, die darin bestehen, den Beutel an sich (1) herzustellen, an einem Benutzungsort Abschlussoperationen, die darin bestehen, den Beutel an sich (1) zu benutzen, indem man auf Wunsch das/die biopharmazeutische Produkt/Vorrichtung in denselben einfügt und die gewünschte Behandlung gewährleistet, und Zwischenoperationen wie Lagerung, Transport, Handhabung, **gekennzeichnet durch**:
- die Herstellung, am Fabrikationsort, eines Beutels mit integriertem und aktivem Unversehrtheitsanzeiger, der den Beutel an sich (1) umfasst, gemäß einem der Ansprüche 26 bis 31,
- den Transport des Beutels mit integriertem und aktivem Unversehrtheitsanzeiger, der den Beutel an sich (1) umfasst, vom Fabrikations- zum Benutzungsort, gegebenenfalls tels Lagerung- und Handhabungsoperationen,
- und, zumindest am Benutzungsort und kurz vor dem Zeitpunkt, der für die Entnahme des Beutels an sich (1) aus dem zweiten Mantel (8) und für die Einführung des/der biopharmazeutischen Produkts/Vorrichtung in den Beutel an sich (1) vorgesehen ist, die visuelle Prüfung der Farbe des mindestens einen kolorimetrischen Sensors (12) vornimmt, um festzustellen, ob der mindestens eine kolorimetrische Sensor (12) die erste Farbe oder die zweite Farbe aufweist, wobei der Beutel an sich (1) nur dann für das/die biopharmazeutische Produkt/Vorrichtung verwendet wind, wenn der mindestens eine kolorimetrische Sensor (12) die erste Farbe aufweist, während, wenn der mindestens eine kolorimetrische Sensor (12) die zweite Farbe hat, der Beutel an sich (1) nicht für das/die biopharmazeutische Produkt/Vorrichtung benutzt wird.
